# EUROPEAN PATENT APPLICATION

(11) **EP 4 684 951 A2**
(43) Date of publication of application: **28.01.2026**
(21) Application number: 25183905.6
(22) Date of filing: 19.06.2025
(51) Int. Cl.: B30B 15/06, B44B 5/02, B44C 1/24, B44F 9/02, B32B 3/30

(54) **STRUCTURED PRESS ELEMENT AND METHOD FOR MANUFACTURING A STRUCTURED PRESS ELEMENT**

(30) Priority: 12.07.2024 US 202463670130 P; 22.04.2025 EP 25171712
(71) Applicant: Unilin, BV, 8710 Wielsbeke (BE)
(72) Inventor: Maesen, Christophe, 8710 Wielsbeke (BE); Seynaeve, Bram, 8710 Wielsbeke (BE); Grillet, Bastien, 8710 Wielsbeke (BE)
(74) Representative: Unilin Technologies

(57) **Abstract**

A method for manufacturing a structured press element (1), said structured press element (1) comprising a structured pressing surface (2), wherein a metallic base element (4) is provided, such as a plate or a roller, wherein this metallic base element (4) has an outer surface (5), said outer surface (5) being a substantially smooth surface or being a pre-structured surface, wherein the method further preferably comprises at least the following treatments which are performed upon the outer surface (5) to obtain the structured pressing surface (2):
- a laser removal treatment for removing material from the metallic base element (4) with one or more lasers (9), wherein at one or more locations material is removed and wherein one or more recast layers (10) are created as a result of said laser removal treatment;
- one or more recast layer treatments for removing and/or altering at least part of said one or more recast layers (10).

## Description

The present invention relates to press elements and to methods for manufacturing press elements.

Said press elements can be used in a method for manufacturing panels, wherein the panels are of the type that comprises a substrate and a decorative top layer applied thereon. These may be for example floor panels that consist mainly of a substrate and a top layer. The substrate may for example comprise an MDF or HDF (Medium Density Fiberboard or High Density Fiberboard) panel or a particle board panel, on which a top layer, such as a laminated top layer comprising resin-impregnated layers of paper, is applied. The substrate may also comprise one or more thermoplastic-based layers, wherein a top layer, such as a laminated top layer comprising thermoplastic-based sublayers, is then applied. Other examples of possible substrates are, among others, mineral-based substrates, such as cement-based, MgO-based or gypsum-based substrates, or geopolymer-based substrates.

In particular, the invention relates to a method for manufacturing press elements, wherein said press elements are used in a method for manufacturing coated panels with a printed decor with a transparent or translucent plastic layer extending above it. It is known that a decor of this kind, possibly provided that priming coats are applied, can be printed directly on the substrate. The decor may however also be provided on a sheet of material, such as a paper sheet or a plastic foil, which is incorporated in the aforementioned top layer. Optionally, a transparent or translucent plastic layer may form a protective layer above the printed decor and this transparent or translucent plastic layer may for example comprise wear-resistant particles such as aluminum oxide or corundum. It is not excluded that this protective layer also comprises a sheet of material, such as a paper sheet or plastic foil. It may for example relate to the manufacture of laminate floor panels, for example according to a DPL (Direct Pressure Laminate) or HPL (High Pressure Laminate) technique. In the case of a DPL technique, one or more sheets of material provided with resin together with the substrate are introduced into a press where on the basis of a press element and under the action of increased pressure and temperature, they are bonded both together and to the substrate. In the case of an HPL technique, the top layer is formed separately on the basis of two or more sheets of material provided with resin, before the resultant top layer is applied on the substrate, for example by gluing this to the substrate. According to another possibility, it may relate to the manufacture of plastic-based floor panels or floor coverings, for example such as vinyl panels, vinyl coverings and the like.

It is known, for example from WO 01/96689 or WO 2014/115086, that a relief of impressed portions can be formed on the surface or the decorative side of said panels, with which for example the natural structure of the pattern reproduced in the aforementioned decor can be imitated. Thus, for example in the case when the decor reproduces a wood pattern, a relief is used that imitates a wood structure. Said wood structure may optionally be coordinated with the underlying decor, so that then so-called depressions are obtained in register with the printed decor.

To produce a relief on the decorative side, structured press elements are used, as is known. Various techniques are known for manufacturing said press elements, for example from WO 2006/066776, EP 2 123 476, EP 2 251 193, EP 1 987 395 and EP 2 834 076.

From EP' 193, a method for manufacturing a press element which is provided with a relief is known, with the characteristic that during the manufacture of the press element, on one or more zones a treatment by means of a laser beam is performed. Said treatment is able to remove small amounts of material in an accurate manner, realizing a microstructure.

WO'776 teaches that the projecting parts of a press plate, which have to form deep impressed portions on the surface of the decorative panel, for example embossments with a depth of minimum 0,4 mm, are the result of treating the press plate with a machining tool. Treating a press plate with a machining tool, for example a milling tool, to form projecting parts, intended to create deep impressed portions on a decorative panel, is not highly accurate due to the inherent limitations in terms of accuracy of machining operations, which can cause variations and imperfections in the depth and shape of the projections, resulting in a less than desirable result in the final decorative pattern. Additionally, machining certain details in a press plate can be challenging or impossible because the size and shape of the milling tool might prevent it from accessing tight corners, deep recesses, or intricate features.

From WO 2008/120058, it is known to provide the press element with a wear-resistant covering layer or protective layer which substantially consists of a metallic matrix, wherein said metallic matrix comprises chromium.

The press elements that are obtained on the basis of the methods from the prior art still leave something to be desired, particularly when they are used for matte finishes and/or for producing relatively deep and relatively narrow structural portions in the surface of the press element in question, for example in the case of structural portions requiring a high level of accuracy with a depth greater than 0.3 mm and a width of 0.3 mm or less.

The present invention relates to alternative methods for manufacturing a press element and alternative press elements, which according to various preferred embodiments of the invention can offer advantages relative to the prior art, more in particular which allow to obtain press elements with structural portions with a relatively high depth and a relatively narrow width, for example a depth greater than 0.3 mm and a width of 0.3 mm or less, for example 0.22 mm in an accurate and qualitative manner.

According to a first aspect, the invention relates to a method for manufacturing a structured press element, said structured press element comprising a structured pressing surface, wherein a metallic base element is provided, such as a plate or a roller, wherein this metallic base element has an outer surface, this outer surface being a substantially smooth surface or being a pre-structured surface, wherein the method further comprises at least the following treatments which are performed upon the outer surface to obtain the structured pressing surface:
- a laser removal treatment for removing material from the metallic base element with one or more lasers, wherein at one or more locations material is removed and wherein one or more recast layers are created as a result of said laser removal treatment;
- one or more recast layer treatments for removing and/or altering at least part of said one or more recast layers.

Said structured pressing surface refers to a specially designed surface on said press element, such as a press plate, a roller, a press belt and the like, that has a predefined structure, for example a texture and/or relief and/or pattern. Said structured pressing surface is used to impart a corresponding structure onto a material to be pressed, such as a laminated material, such as a laminated plate material, a laminated slab material and/or a laminated web material. It is preferred that said material to be pressed is used in the manufacturing of decorative panels, such as wall panels, floor panels, ceiling panels and the like.

Preferably said laminated material comprises a substrate and a laminated thereon top layer. Said top layer preferably comprises a decorative layer, such as an impregnated decorative paper layer or a decorative foil layer, for example a thermoplastic decorative foil layer.

Preferably said top layer comprises a transparent and/or translucent wear layer laminated on top of said decorative layer. Said wear layer preferably comprises a resin impregnated paper, a thermoplastic foil and/or a coating, for example a thermoset coating.

Preferably said laminated plate material comprises a wood based substrate and a laminated thereon top layer. Said wood based substrate comprises particleboard and/or fiberboard and/or wood veneer.

Preferably said laminated slab material comprises a substrate comprising thermoplastic material, for example one, or a combination of the non-exhaustive list: PVC (polyvinyl chloride), PP (polypropylene), PET (polyethylene terephthalate), PETG (polyethylene terephthalate glycol), PLA (polylactic acid) and the like.

Preferably said laminated web material comprises a substrate comprising thermoplastic material, for example one, or a combination of the non-exhaustive list: PVC (polyvinyl chloride), PP (polypropylene), PET (polyethylene terephthalate), PETG (polyethylene terephthalate glycol), PLA (polylactic acid) and the like. Wherein said web material refers to a continuous material that is produced as a continuous sheet material, for example on a roll or directly connected to a die of an extruder.

A smooth surface is defined as a surface that is essentially free of relief, meaning said surface essentially lacks any depressions and/or projecting parts. For a plate, said smooth surface reads onto a flat surface. For a roller, said smooth surface reads onto a smooth cylindrical outer surface.

Said metallic base element is preferably made from a metallic base material.

Said pre-structured surface relates to an outer surface having a basic structure, for example comprising a basic relief with one or more depressions and/or projecting parts. Said pre-structured surface already forms an approximation of the eventual structured pressing surface. The closer said pre-structured surface approximates the eventual structured pressing surface, the less material will have to be removed during said laser removal treatment.

Said laser removal treatment removes material from the metallic base element at one or more locations of said outer surface, thereby forming removed material portions. For example at locations where high precision material removal is required, such as around the contour of one or more protrusions of the structured outer surface, or for forming a trench between two closely positioned protrusions. It is preferred that the depth of material removal is at least 10 µm.

In the case said metallic base element is a plate, said depth of material removal can be defined as the distance, measured in a direction perpendicular to the plate, between the original surface level before said laser removal treatment at a location where material is removed, and the deepest point of the structured press element at said location where material has been removed by said laser removal treatment.

**In** the case said metallic base element is a roller, said depth of material removal can be defined as the distance measured in a direction pointing to the core of the structured press element, i.e. the radial direction of said roller, between the original surface level before said laser removal treatment at a location where material is removed and the deepest point of the structured press element at said location where material has been removed by said laser removal treatment.

Said laser removal treatment uses one or more lasers for removing material from the metallic base element, by irradiating a surface of said metallic base element with a laser beam. The material at the irradiated surface of said metallic base element is heated by the absorbed laser energy and melts, evaporates, sublimates and/or is converted to a plasma.

Said laser removal treatment is preferably performed in successive layers. For example, to achieve a depth of material removal of 10 µm, the process may be executed in 5 passes, each removing a layer of material from the metallic base element with a thickness of 2 µm. It is noted that the thicker the layer to be removed, the greater the pulse energy required from the laser needs to be, as increased energy is necessary to heat, melt, and subsequently evaporate or sublimate the additional material.

It is possible that as a result of said laser removal treatment, a thin layer of molten and/or evaporated and/or sublimated and/or plasma material resolidifies into a recast layer, at and/or in the vicinity of the location where material has been removed by said laser removal treatment. Said recast layer often displays altered material properties when compared to the metallic base material underneath said recast layer, such as altered hardness, roughness and/or microstructure. Since the structured pressing surface comprising one or more recast layers does not have uniform properties, the surface of material pressed with such a press element can also have defects , for example the surface finish and/or visual appearance of said material can be less qualitative. Said recast layer can be very brittle, which can lead to cracking of said recast layer. Cracking in said recast layer can then be transferred onto the material to be pressed, which results in an undesirable appearance of the material pressed with said press element. Said cracking of said recast layer can further lead to delamination of said recast layer, thereby compromising the structural integrity and dimensional stability of the structured pressing surface.

Forming deep and narrow detailed structures on the outer surface of a metallic base element, for example a structure having a depth of 400 µm and a width of 290 µm, using said laser removal treatment, presents significant challenges. The critical difficulty lies in the inherent relationship between the depth and width of the removed material portion, which typically approximates a V-shape. The inventors have found that when the angle at the tip of said V-shape becomes smaller than 50°, for example 45° or less, for example 40° or less, a superfluous amount of recast layer is formed and remains trapped within said removed material portion.

The more material is removed by means of a laser removal treatment, the larger the amount of recast layer that can be formed. However, said recast layer results in a less favorable surface for the adherence of a possible protective layer, leading to difficulties in achieving a uniform and durable protective layer.

Preferably, said treatments which are performed upon the outer surface to obtain the structured pressing surface, further comprise:
- a protective layer treatment,
for example a plating treatment, preferably a chrome treatment, for applying a protective layer.

Said protective layer treatment enhances the durability and resistance to wear and corrosion of said structured pressing surface, ensuring a longer lifespan and consistent performance. Additionally, the protective layer improves the quality and precision of the embossing on the material to be pressed.

It should be noted that once a protective layer has been applied, said protective layer forms an exterior surface of the structured press element. Preferably said exterior surface is provided to contact the material which is pressed with the structured press element.

In one preferred embodiment, said protective layer treatment is a diamond-like carbon (DLC) coating treatment for applying a DLC-layer. Said DLC-coating treatment can offer improved hardness and wear resistance to the structured pressing surface, with respect to a chrome treatment. Said DLC-layer generally exhibits strong adhesion to a variety of metallic base elements and said coatings are less prone to cracking or peeling, when compared to the chromium layer applied during a chrome treatment.

In another preferred embodiment, said protective layer treatment is a physical vapor deposition (PVD) coating treatment for applying a PVD-layer. Preferably said PVD-layer comprises titanium nitrate.

In another preferred embodiment, said protective layer treatment is a chemical vapor deposition (CVD) coating treatment for applying a CVD-layer.

It is preferred that said recast layer treatment is performed after said laser removal treatment and preferably said protective layer treatment is performed after said recast layer treatment. Said one or more recast layer treatments for removing and/or altering at least part of said one or more recast layers, ensure that said protective layer adheres well.

Preferably said laser removal treatment uses a Nano laser and/or a Pico laser. It is preferred that said laser removal treatment uses a pulsed laser. Nano lasers are lasers which typically exhibit pulse durations in the order of nanoseconds. Pico lasers are lasers which typically exhibit pulse durations in the order of picoseconds. Both Nano and Pico lasers can focus on very small areas, allowing for highly precise material removal. The high precision of both laser types results in limited heat-affected zones, which are zones adjacent to the location where material is removed that are affected by the generated heat of said laser removal treatment. Smaller heat-affected zones result in less thermal damage to the material adjacent to locations where material is removed, thereby ensuring integrity of the workpiece. For an equal power output, Nano lasers can generate larger heat-affected zones, comprising heat-affected material, than Pico lasers, since for an equal power output, a Nano laser will have a higher pulse energy as well as a longer pulse duration than a Pico laser.

Depending on the desired depth of material removal, the material of the metallic base element and the required level of precision of the laser removal treatment, one or a combination of said lasers can be used. It can be beneficial to remove larger portions of material with a Nano laser and finer portions of material with a Pico laser. Both lasers can be used simultaneously or subsequently. It can also be beneficial to use a Nano laser on locations where generating heat-affected zones is less of an issue, for example locations for which the heat-affected material is intended to be removed. A Pico laser can then be used on more critical locations on said metallic base element.

Since the depth over which the laser energy is absorbed by the metallic base element, and thus the amount of material removed by a single laser pulse, is at least dependent on the optical properties of the metallic base element, the laser wavelength and the pulse duration, it is possible to obtain different depths of material removal in a single pass by using a combination of Nano and Pico lasers.

In an alternative embodiment, said laser removal treatment uses a Femto laser. Femto lasers are lasers which typically exhibit pulse durations in the order of femtoseconds. Femto lasers can focus on very small areas, allowing for highly precise material removal. The high precision and the extremely short pulse duration result in limited heat-affected zones. The inventors have found that by using a Femto laser in said laser removal treatment, the location at which material has been removed remains free, or mostly free from a recast layer (i.e. a recast layer with a thickness of less than 5 µm).

In a preferred embodiment, said laser removal treatment uses a Femto laser operating in a burst regime. Said burst regime refers to a specific mode of laser operation where multiple femtosecond pulses are emitted in quick succession, typically within a time frame of a few picoseconds to nanoseconds. Each burst consists of a series of femtosecond pulses that interact with the material surface. It is preferred that the pulse energy of each pulse within a burst can be controlled. Preferably the amount of pulses within a burst can be controlled. Said burst regime can allow for better control of said laser removal treatment, thereby allowing for an improved level of quality control of the removed material portion and/or resulting in thinner, less and/or no recast layers.

Said laser removal treatment can use a combination of any of the three lasers discussed above. It can be beneficial to remove larger and/or deeper portions of material with a Nano and/or a Pico laser and finer portions of material with a Femto laser, optionally operating in a burst regime. The location at which material has been removed by the Femto laser can then be free, or mostly free from a recast layer.

In a preferred embodiment, said laser removal treatment includes beam splitting of a laser beam. It was found by the inventors that the greater the pulse energy and pulse duration of the laser beam focused on the outer surface, the greater the amount of heat-affected zones, as well as the greater the amount of recast layer present after said laser removal treatment will be. To limit the amount of heat-affected zones, as well as the amount of recast layer created by said laser removal treatment, it is possible to limit the pulse energy of the laser beam focused on the outer surface. However, by limiting said pulse energy, the thickness of a layer that is removed by a single pass of the laser beam is limited as well, which further limits the throughput of said laser removal treatment. The inventors have found that by beam splitting said laser beam into two or more laser beams, a good throughput of said laser removal treatment can be achieved while limiting the pulse energy of a single laser beam, thereby limiting the creation of heat-affected zones and recast layer.

In a specific embodiment, said laser removal treatment makes use of a scanner. Said scanner is a device that is used to control the direction and movement of a laser beam. Said scanner preferably comprises one or more mirrors mounted on electronically controlled actuators, for example galvanometers. Said one or more mirrors are able to deflect said laser beam in different directions. The inventors have found that by increasing the speed of said scanner, the pulse energy of said laser beam can be limited, while still achieving a good throughput of said laser removal treatment, consequently limiting or preventing the creation of heat-affected zones and recast layer. Preferably the speed of said scanner is 150 m/s or more, more preferably 250 m/s or more, even more preferably 300 m/s or more.

According to a preferred embodiment, said laser removal treatment includes beam splitting of a laser beam and makes use of a scanner. Preferably the speed of said scanner is 150 m/s or more, more preferably 250 m/s or more, even more preferably 300 m/s or more.

According to another preferred embodiment, said laser removal treatment makes use of a Femto laser operating in a burst regime and said laser removal treatment includes beam splitting of a laser beam and makes use of a scanner. Preferably the speed of said scanner is 150 m/s or more, more preferably 250 m/s or more, even more preferably 300 m/s or more.

It is preferred that said laser removal treatment uses a laser, for example a Nano and/or Pico and/or Femto laser, which emits light in the infrared and/or near-infrared range, preferably ranging from between 780 nm to 3000 nm, more preferably of between 780 nm and 1500 nm, even more preferably of between 950 nm and 1250 nm, most preferably of between 1050 nm and 1100 nm, for example 1068 nm. Lasers with wavelengths within this given range are particularly suited for material removal, due to their efficient absorption by metallic base elements. Wavelengths within said range enable high precision and a high level of focus, which facilitates the creation of detailed structures in the metallic base element.

As a result of said laser removal treatment, one or more recast layers can be created. As already stated above, the presence of a recast layer can have adverse effects on the structural integrity and dimensional stability of the pressing surface and the material being pressed. Additionally, said recast layer results in a less favorable surface for the adherence of a protective layer, leading to difficulties in achieving a uniform and durable protective layer. Therefore, a need exists to at least partially remove and/or alter said one or more recast layers. By at least partially removing and/or altering said one or more recast layers, a structured press element comprising deep structures, wherein said deep structures can be highly detailed, can be manufactured.

In a preferred embodiment a said recast layer treatment is a recast removal treatment for removing at least part of said one or more recast layers, said recast removal treatment being chosen from the list of:
- an etching treatment;
- a pickling treatment;
- a mechanical removal treatment, such as brushing and/or blasting;
- an optical treatment, such as a treatment with beams of light;
- an electrochemical treatment, such as anodic pickling and/or anodic etching;
- an ultrasonic treatment, such as an ultrasonic bath;
- a rinsing treatment, for example a pressure washing treatment,
wherein preferably the method comprises at least two of said recast removal treatments. Said at least two recast removal treatments can be the same recast removal treatments, however it is preferred that said at least two recast removal treatments are different recast removal treatments.

Preferably a said recast removal treatment is an etching treatment, which makes use of an etching liquid. Said etching liquid can or cannot comprise inhibitors. Said etching liquid comprising inhibitors is preferably chosen and/or configured in such a way that said etching liquid selectively targets and dissolves said one or more recast layers while leaving the metallic base material largely unaffected. The inhibitors substantially prevent the etching liquid from reacting with the metallic base material, ensuring that the etching treatment primarily removes the recast layer.

In a preferred embodiment, a said recast removal treatment is an etching treatment, which makes use of an etching liquid, said etching liquid comprising or consisting of nitric acid and/or hydrochloric acid and/or phosphoric acid. The inventors have found that a said recast layer can be effectively softened and/or removed using any one or a combination of the proposed etching liquids.

Preferably a said recast removal treatment is an etching treatment, which makes use of an etching liquid, wherein said etching liquid is locally applied at one or more locations where a recast layer is formed. Preferably use is made of a numerically controlled application system for the application of said etching liquid. By locally applying said etching liquid, the risk of impacting the metallic base material with said etching liquid is minimized.

Preferably a said recast removal treatment is a pickling treatment, which makes use of a pickling liquid comprising inhibitors, such that said pickling liquid primarily impacts said one or more recast layers. Said pickling liquid comprising inhibitors is preferably chosen and/or configured in such a way that said pickling liquid selectively targets and dissolves said on or more recast layers while leaving the metallic base material largely unaffected. The inhibitors substantially prevent the pickling liquid from reacting with the metallic base material, ensuring that the pickling treatment primarily removes the recast layer.

Preferably a said recast removal treatment is a pickling treatment, which makes use of a pickling liquid, wherein said pickling liquid is locally applied at one or more locations where a recast layer is formed. Preferably use is made of a numerically controlled application system for the application of said pickling liquid. By locally applying said pickling liquid, the risk of impacting the metallic base material with said pickling liquid is minimized.

Preferably a said recast removal treatment is a mechanical removal treatment using one or more water jets, for example a water jet cutting treatment or an abrasive water jet cutting treatment, wherein abrasive particles are entrained into the water jet stream. Such treatments offer the advantages that said one or more recast layers can be removed without overheating the metallic base material and no or minimal dust and fumes are generated as a result of said treatment.

Preferably a said recast removal treatment is an optical treatment using one or more lasers, wherein said one or more lasers are preferably Nano lasers and/or Pico lasers and/or Femto lasers. Preferably the wavelength and/or intensity and/or treatment duration of said one or more lasers is chosen to primarily remove recast layers.

It is preferred that said optical treatment using one or more lasers is primarily aimed at said one or more recast layers, wherein said one or more lasers irradiate at least a portion of said one or more recast layers. At least a portion of the irradiated recast layer is heated by the absorbed laser energy and evaporates and/or sublimates and/or is converted to a plasma. Preferably use is made of one or more Femto lasers.

Preferably a said recast removal treatment is an ultrasonic treatment, making use of an ultrasonic bath, preferably comprising an alkaline solution.

In a preferred embodiment, the method comprises at least two recast removal treatments, namely a pickling treatment and a rinsing treatment. It is preferred that said rinsing treatment, preferably a pressure washing treatment, is performed after said pickling treatment. Preferably a third recast removal treatment, namely a mechanical removal treatment, preferably a brushing treatment is performed after said pickling treatment and before said rinsing treatment. Alternatively said mechanical removal treatment is performed after said rinsing treatment.

In another preferred embodiment, the method comprises at least two recast removal treatments, namely a pickling treatment and an ultrasonic treatment, preferably an ultrasonic bath treatment. It is preferred that said ultrasonic treatment is performed after said pickling treatment. Preferably a third recast removal treatment, namely a rinsing treatment, preferably a pressure washing treatment, is performed after said ultrasonic treatment. Alternatively said rinsing treatment is performed after said pickling treatment and before said ultrasonic treatment.

In another preferred embodiment, the method comprises at least two recast removal treatments, namely a pickling treatment and a mechanical removal treatment. It is preferred that said mechanical removal treatment, preferably a brushing treatment, is performed after said pickling treatment. Preferably a third recast removal treatment, namely an etching treatment is performed after said mechanical removal treatment.

In another preferred embodiment, the method comprises at least two recast removal treatments, namely a mechanical removal treatment, preferably a blasting treatment and an ultrasonic treatment, preferably an ultrasonic bath treatment. It is preferred that said ultrasonic bath treatment is performed after said mechanical removal treatment. Preferably a third recast removal treatment, namely a rinsing treatment, preferably a pressured washing treatment is performed after said mechanical removal treatment and before said ultrasonic treatment. Alternatively said rinsing treatment is performed after said ultrasonic treatment.

Depending on the thickness as well as the location and material composition of the one or more recast layers, different combinations of recast removal treatments can be necessary to effectively remove said one or more recast layers.

Preferably a said recast layer treatment is a recast remelt treatment, for remelting at least part of said one or more recast layers. The inventors found that by at least partially remelting, said one or more recast layers, the adherence between said one or more recast layers and the protective layer applied by said protective layer treatment, can be significantly improved.

It is preferred that at least part of said one or more recast layers is remelted together with at least part of said metallic base material, leading to a uniform composition of the remelted and subsequently resolidified material. Said subsequently resolidified material comprising a portion of resolidified recast layer and resolidified metallic base material. Said subsequently resolidified material is further also referred to as recast layer. The inventors found that the adherence between said recast layer and the protective layer applied by said protective layer treatment, can be significantly improved as a result of said recast remelt treatment.

Preferably said recast remelt treatment makes use of one or more lasers, preferably Nano lasers and/or Pico lasers and/or Femto lasers. Alternatively said recast remelt treatment makes use of one or more continuous lasers, preferably continuous carbon dioxide lasers. At least a portion of the irradiated recast layer is heated by the absorbed laser energy and melts and subsequently resolidifies. Preferably the wavelength and/or intensity and/or treatment duration of said one or more lasers is configured in such a way that said resolidified recast layer exhibits better adherence to the protective layer, when compared to a recast layer which has not undergone a recast remelt treatment.

Alternatively said recast remelt treatment makes use of one or more electron beams.

It is preferred that said recast remelt treatment is performed under controlled conditions. Preferably the heat source and/or atmosphere and/or cooling rate are controlled.

It is preferred that the method comprises at least two of said recast layer treatments, being at least one recast removal treatment and at least one recast remelt treatment, and wherein said at least one recast remelt treatment is preferably performed after said at least one recast removal treatment.

In a preferred embodiment, said at least one recast removal treatment is a mechanical removal treatment, preferably a blasting treatment, more preferably a sand blasting treatment so that a significant amount of recast layer is removed and said recast remelt treatment makes use of one or more lasers, e.g. Pico lasers, so that the remaining amount of recast layer can be remelted to obtain a better adherence with the protective layer applied by said protective layer treatment.

In another preferred embodiment, said at least one recast removal treatment is a pickling treatment and said recast remelt treatment makes use of one or more lasers, e.g. Nano lasers.

In a more preferred embodiment, the method comprises at least two recast removal treatments, namely a pickling treatment and a rinsing treatment, and a recast remelt treatment, said recast remelt treatment makes use of one or more lasers, e.g. Nano lasers and/or Pico lasers and/or Femto lasers, wherein said recast remelt treatment is performed after said at least two recast removal treatments. It is preferred that said rinsing treatment, preferably a pressure washing treatment, is performed after said pickling treatment.

It is preferred that besides said laser removal treatment, said one or more recast layer treatments and optionally said protective layer treatment, one or more additional treatments are performed upon the outer surface, wherein preferably at least one of said one or more additional treatments is a full surface treatment performed upon at least 75% of the total surface area of said outer surface, wherein said one or more additional treatments can for example:
- provide a surface finish chosen from the list of: matte finish, glossy finish, textured finish;
- provide an average surface roughness of between 0.1 µm and 4.0 µm;
- provide an oxide removal.

Said average surface roughness (Ra) can be measured with a roughness meter.

Preferably said one or more additional treatments are chosen from the list of: etching treatment; pickling treatment; electrochemical pickling treatment; passivation treatment; polishing treatment; blasting treatment, for example sandblasting; electropolishing treatment; anodizing treatment; coating treatment; finishing laser treatment.

It is preferred that a said full surface treatment is a finishing laser treatment, wherein use is made of a Femto laser. Preferably said finishing laser treatment provides a matte finish to said outer surface. Preferably said finishing laser treatment provides an average surface roughness of higher than 0.3 µm, preferably of higher than 0.35 µm, more preferably of higher than 0.4 µm. It was found that an improved adhesion between said outer surface and a protective layer can be obtained when the surface roughness of at least 75% of the total surface area of said outer surface is above this value.

Preferably said finishing laser treatment provides a surface roughness of lower than 0.9 µm, preferably of lower than 0.8 µm, more preferably of less than 0.55 µm It was found that the surface roughness of at least 75% of the total surface area of said outer surface is best kept below this value to prevent dirt and other residues from being trapped on said outer surface.

It is preferred that at least one of said one or more additional treatments is a said full surface treatment, the full surface treatment being a treatment for removing oxides, for example an etching treatment or a pickling treatment for removing oxides. Oxides are a form of contamination on the outer surface of the metallic base element, which can be naturally present on the metallic base element and/or formed during processing of said metallic base element and which can lead to defects in the eventual structured press element, such as bad adhesion of the protective layer.

In one embodiment, the method comprises a said recast removal treatment, which at least comprises a pickling treatment performed upon the outer surface of the metallic base element, which makes use of a pickling liquid comprising inhibitors, such that said pickling liquid primarily impacts said one or more recast layers; and said method comprises at least a said full surface treatment being a pickling treatment for removing oxides, wherein said full surface treatment is performed after said recast removal treatment. This sequential approach ensures thorough cleaning by first targeting and at least partially removing said one or more recast layers, and subsequently eliminating remaining oxides over a larger portion of the outer surface, preferably over the entire outer surface.

Preferably one or more of said additional treatments are performed before said laser removal treatment. By performing one or more of said additional treatments before said laser removal treatment, the outer surface can for example be cleaned and/or preconditioned, for example by means of a pickling treatment for at least partially removing debris and/or contaminants from the outer surface, thereby improving efficiency of the subsequent laser removal treatment.

Preferably one or more of said additional treatments are performed after said laser removal treatment, preferably without any intermediary treatments after said laser removal treatment. Performing one or more additional treatments after the laser removal treatment, without any intermediary steps, ensures that the surface is immediately cleaned and/or provided with a surface finish, providing an optimal condition for subsequent processing steps. Preferably, a said additional treatment is a pickling treatment.

Preferably one or more of said additional treatments are performed before said protective layer treatment preferably without any intermediary additional treatments before said protective layer treatment. This way the surface finish and/or surface roughness can be chosen to ensure an optimal adherence of the protective layer to the outer surface of the metallic base element. Preferably a said additional treatment is an etching treatment and is performed without any intermediary additional treatments before said protective layer treatment. It can still be possible that a cleaning step, for example a pressured washing step, is performed after said etching treatment and before said protective layer treatment for removing any residual etching liquid from the outer surface.

It is also possible that one or more of said additional treatments are performed before said laser removal treatment and one or more additional treatments are performed after said laser removal treatment. It is preferred that a said additional treatment, being a pickling treatment is performed before said laser removal treatment, such that the outer surface is cleaned, thereby increasing the efficiency of said laser removal treatment, and that a said additional treatment, being an etching treatment is performed after said laser removal treatment, more particularly before said protective layer treatment, such that a surface roughness of the outer surface can be achieved that enables a good adhesion between said outer surface and the protective layer. Possibly a further additional treatment, such as a polishing treatment is needed after said additional treatment being an etching treatment, to achieve the desired surface roughness before providing said protective layer treatment.

In one embodiment one or more of said additional treatments are performed upon the protective layer, wherein said one or more additional treatments provide a surface finish chosen from the list of: matte finish, glossy finish, textured finish; and/or wherein said one or more additional treatments provide an average surface roughness of between 0.1 µm and 2 µm to the protective layer on the outer surface of the metallic base element. For example, a said additional treatment being a polishing treatment is performed upon the protective layer.

Preferably a said full surface treatment for removing oxides and said protective layer treatment are performed in a same chrome bath, wherein said full surface treatment for removing oxides is a reverse chrome plating treatment for removing chrome oxides and wherein said protective layer treatment is a chrome plating treatment.

It is preferred that the outer surface of the metallic base element is a pre-structured surface, and wherein this pre-structured surface is obtained by one or more structuring treatments chosen from the list of: milling, laser ablation, etching treatment, pickling treatment, anodic pickling treatment, spark erosion, waterjet cutting or abrasive waterjet cutting, ultrasonic machining, plasma cutting. Said one or more structuring treatments results in an approximation of the final structure of the structured pressing surface. The more material that can be removed by said one or more structuring treatments, the less material needs to be removed by said laser removal treatment, leading to less recast layer formation.

Preferably said one or more structuring treatments are performed prior to said laser removal treatment. Consequently, said laser removal treatment is performed upon said pre-structured surface.

It is preferred that the outer surface of the metallic base element is a pre-structured surface, and that before said laser removal treatment, at least a portion of the pre-structured surface is scanned, for example with a 2D surface scanner or a 3D surface scanner, resulting in a scan of said pre-structured surface, wherein said scan provides data relating to said pre-structured surface.

Alternatively to scanning at least a portion of the pre-structured surface, or in addition to scanning at least a portion of the pre-structured surface, data relating to said pre-structured surface can also be obtained with aid of simulations and/or artificial intelligence which predict the pre-structured surface on the basis of the treatments performed to obtain this pre-structured surface.

Preferably said data relating to said pre-structured surface is used to determine and control on which locations of said pre-structured surface material should be removed with said laser removal treatment.

It is preferred that a depth of material removal, as a result of said laser removal treatment, and optionally as a result of a recast layer treatment, is higher than 20 µm, preferably higher than 50 µm, more preferably higher than 100 µm, and wherein the width of material removal is lower than the depth of material removal, preferably at least 20% lower than the depth of material removal. Of course, this does not exclude that on certain locations material is removed with the width of material removal being higher than or being approximately equal to the depth of material removal.

It is preferred that a depth of material removal, as a result of said laser removal treatment, is higher than 200 µm, preferably higher than 300 µm, more preferably higher than 400 µm and wherein the width of material removal is lower than the depth of material removal, preferably at least 20% lower than the depth of material removal. It is also possible that said depth of material removal, as a result of said laser removal treatment is even higher than 400 µm, for example more than 500 µm, preferably more than 600 µm, more preferably more than 1000 µm, for example 1200 µm. Of course, this does not exclude that on certain locations material is removed with the width of material removal being higher than or being approximately equal to the depth of material removal.

Preferably said structured press element substantially consists of steel, preferably stainless steel, for example stainless steel of grade 630 through 635 or stainless steel of grade 410, according to the SAE designation for stainless steel. This is desirable for structured press plates. The metallic base element preferably substantially consists of a metallic base material, said metallic base material being steel.

Preferably said structured press element substantially consists of copper. This is desirable for structured press rollers. The metallic base element preferably substantially consists of a metallic base material, said metallic base material being copper.

It is an object of the invention to provide a method for manufacturing a structured press element provided with deep and finely detailed portions, preferably for providing deep embossments in the decorative surface of said decorative panels.

Machining certain details in a press plate can be challenging or impossible because the size and shape of a milling tool might prevent it from accessing tight corners, deep recesses, or intricate features.

In the first aspect of the invention, it is proposed to use a laser removal treatment to provide said deep and finely detailed portions. However, further processing might be necessary to remove or alter the composition of a recast layer formed by said laser removal treatment.

As stated in the context of the first aspect, said laser removal treatment can make use of a Femto laser. This is an inventive aspect in and of itself, since by using a Femto laser, the formation of a recast layer can potentially be avoided. It is thus remarked that the invention, in accordance with its second aspect is a method for manufacturing a structured press element, said structured press element comprising a structured pressing surface, wherein a metallic base element is provided, such as a plate or a roller, wherein said metallic base element has an outer surface, this outer surface being a substantially smooth surface or being a pre-structured surface,
wherein the method further comprises at least the following treatment which is performed upon the outer surface to obtain the structured pressing surface:
- a laser removal treatment for removing material from the metallic base element, wherein at one or more locations material is removed and wherein said laser removal treatment makes use of a Femto laser.

It is noted that all characteristics and embodiments related to the structured pressing surface, the metallic base element and the pre-structured surface and treatments disclosed within the context of the first aspect, are mutatis mutandis applicable to the second aspect and vice versa.

It is preferred that said Femto laser emits light in the infrared and/or near-infrared range, for example ranging from between 780 nm to 3000 nm, more preferably of between 780 nm and 1500 nm, even more preferably of between 950 nm and 1250 nm, most preferably of between 1050 nm and 1100 nm, for example 1068 nm. Advantages of lasers operating with wavelengths within this given range are already disclosed in the above description.

Preferably, said treatments which are performed upon the outer surface to obtain the structured pressing surface, further comprise:
- a protective layer treatment,
for example a plating treatment, preferably a chrome treatment, for applying a protective layer.

Said protective layer treatment enhances the durability and resistance to wear and corrosion of said outer surface, ensuring a longer lifespan and consistent performance. Additionally, the protective layer improves the quality and precision of the embossing on the decorative panels.

In one preferred embodiment, said protective layer treatment is a diamond-like carbon (DLC) coating treatment for applying a DLC-layer. Explanation and advantages of said DLC coating are known from the description above.

In another preferred embodiment, said protective layer treatment is a physical vapor deposition (PVD) coating treatment for applying a PVD-layer Preferably said PVD-layer comprises titanium nitrate.

In another preferred embodiment, said protective layer treatment is a chemical vapor deposition (CVD) coating treatment for applying a CVD-layer.

It is known from the description above that the presence of a recast layer results in a less favorable surface for the adherence of a such protective layer. However, by using a Femto laser for said laser removal treatment, the formation of such a recast layer can be prevented or minimized. Therefore, said laser removal treatment is able to provide a suitable surface for a subsequent protective layer treatment.

In a preferred embodiment, said laser removal treatment using a Femto laser operates in a burst regime. Explanation and advantages of said burst regime are known from the description above.

In a preferred embodiment, said laser removal treatment includes beam splitting of a laser beam. Explanation and advantages of said beam splitting are known from the description above. It was found by the inventors that the greater the pulse energy and pulse duration of the laser beam focused on the outer surface, the greater the amount of heat-affected zones, as well as the greater the amount of recast layer present after said laser removal treatment will be. To limit the amount of heat-affected zones, as well as the amount of recast layer created by said laser removal treatment, it is possible to limit the pulse energy of the laser beam focused on the outer surface. However, by limiting said pulse energy, the thickness of a layer that is removed by a single pass of the laser beam is limited as well, which further limits the throughput of said laser removal treatment. The inventors have found that by beam splitting said laser beam into two or more laser beams, a good throughput of said laser removal treatment can be achieved while limiting the pulse energy of a single laser beam, thereby limiting the creation of heat-affected zones and recast layer. The invention according to a first variant of the second aspect of the invention therefore relates to a method according to the second aspect of the invention wherein, instead of said laser removal treatment for removing material from the metallic base element making use of a Femto laser, in this first variant a Nano laser and/or a Pico laser, with beam splitting of laser beams of said Nano laser and/or Pico laser, is used, as such to avoid recast layers or to have less recast layers.

In a specific embodiment, said laser removal treatment makes use of a scanner. Preferably the speed of said scanner is 150 m/s or more, more preferably 250 m/s or more, even more preferably 300 m/s or more. Said scanner is a device that is used to control the direction and movement of a laser beam. Said scanner preferably comprises one or more mirrors mounted on electronically controlled actuators, for example galvanometers. Said one or more mirrors are able to deflect said laser beam in different directions. The inventors have found that by increasing the speed of said scanner, the pulse energy of said laser beam can be limited, thereby achieving a good throughput of said laser removal treatment, while limiting the creation of heat-affected zones and recast layer. The invention according to a second variant of the second aspect of the invention therefore relates to a method according to the second aspect of the invention wherein, instead of said laser removal treatment for removing material from the metallic base element making use of a Femto laser, in this second variant a Nano laser and/or a Pico laser are used, wherein use is made of said scanner, as such to avoid recast layers or to have less recast layers.

According to a preferred embodiment, said laser removal treatment includes beam splitting of a laser beam and makes use of a scanner. Preferably the speed of said scanner is 150 m/s or more, more preferably 250 m/s or more, even more preferably 300 m/s or more. The invention according to a third variant of the second aspect of the invention therefore relates to a method according to the second aspect of the invention wherein, instead of said laser removal treatment for removing material from the metallic base element making use of a Femto laser, in this third variant a Nano laser and/or a Pico laser are used, wherein said laser removal treatment includes beam splitting of a laser beam and makes use of a scanner, as such to avoid recast layers or to have less recast layers. Preferably the speed of said scanner is 150 m/s or more, more preferably 250 m/s or more, even more preferably 300 m/s or more.

According to a preferred embodiment, said laser removal treatment includes beam splitting of a laser beam and makes use of a scanner. Preferably the speed of said scanner is 150 m/s or more, more preferably 250 m/s or more, even more preferably 300 m/s or more. Explanation and advantages of said scanner and scanner speed are known from the description above.

According to another preferred embodiment, said laser removal treatment makes use of a Femto laser operating in a burst regime and said laser removal treatment includes beam splitting of a laser beam and makes use of a scanner. Preferably the speed of said scanner is 150 m/s or more, more preferably 250 m/s or more, even more preferably 300 m/s or more.

It is preferred that besides said laser removal treatment and optionally said protective layer treatment, one or more additional treatments are performed upon the outer surface, wherein preferably at least one of said one or more additional treatments is a full surface treatment performed upon at least 75% of the total surface area of said outer surface, wherein said one or more additional treatments can for example:
- provide a surface finish chosen from the list of: matte finish, glossy finish, textured finish;
- provide an average surface roughness of between 0.1 µm and 4.0 µm;
- provide an oxide removal.

Preferably said one or more additional treatments are chosen from the list of: etching treatment; pickling treatment; electrochemical pickling treatment; passivation treatment; polishing treatment; blasting treatment, for example sandblasting; electropolishing treatment; anodizing treatment; coating treatment; finishing laser treatment.

It is preferred that a said full surface treatment is a finishing laser treatment, wherein use is made of a Femto laser. Preferably said finishing laser treatment provides a matte finish to said outer surface. Preferably said finishing laser treatment provides an average surface roughness of higher than 0.3 µm, preferably of higher than 0.35 µm, more preferably of higher than 0.4 µm. It was found that an improved adhesion between said outer surface and a protective layer can be obtained when the surface roughness of at least 75% of the total surface area of said outer surface is above this value.

In a special embodiment, a said full surface treatment is a finishing laser treatment, wherein use is made of a Femto laser, wherein said finishing laser treatment provides a matte finish to said outer surface, and wherein said finishing laser treatment provides an average surface roughness of higher than 1 µm, preferably of higher than 1.5 µm, more preferably of higher than 2 µm. Preferably said finishing laser treatment provides an average surface roughness of lower than 4 µm, preferably of lower than 3 µm. The inventors found that such an average surface roughness is beneficial for imprinting a realistic texture in the material to be pressed, especially in the case that said material to be pressed is used in the production of decorative panels imitating a wood or stone texture.

Preferably said finishing laser treatment provides a surface roughness of lower than 0.9 µm, preferably of lower than 0.8 µm, more preferably of less than 0.55 µm. It was found that the surface roughness of at least 75% of the total surface area of said outer surface is best kept below this value to prevent dirt and other residues from being trapped on said outer surface.

It is preferred that at least one of said one or more additional treatments is a said full surface treatment, the full surface treatment being a treatment for removing oxides, for example a pickling treatment for removing oxides. Oxides are a form of contamination on the outer surface of the metallic base element, which can be naturally present on the metallic base element and/or formed during processing of said metallic base element and which can lead to defects in the eventual structured press element, such as bad adhesion of the protective layer.

Preferably one or more of said additional treatments are performed before said laser removal treatment. By performing one or more of said additional treatments before said laser removal treatment, the outer surface can for example be cleaned and/or preconditioned, for example by means of a pickling treatment for at least partially removing debris and/or contaminants from the outer surface, thereby improving efficiency of the subsequent laser removal treatment.

Preferably one or more of said additional treatments are performed after said laser removal treatment, preferably without any intermediary treatments after said removal treatment. Performing one or more additional treatments after the laser removal treatment, without any intermediary steps, ensures that the surface is immediately cleaned and/or provided with a surface finish, providing an optimal condition for subsequent processing steps. Preferably, a said additional treatment is a pickling treatment.

Preferably one or more of said additional treatments are performed before said protective layer treatment preferably without any intermediary additional treatments before said protective layer treatment. This way the surface finish and/or surface roughness can be chosen to ensure an optimal adherence of the protective layer to the outer surface of the metallic base element. Preferably a said additional treatment is an etching treatment and is performed without any intermediary additional treatments before said protective layer treatment. It can still be possible that a cleaning step, for example a pressured washing step, is performed after said etching treatment and before said protective layer treatment for removing any residual etching liquid from the outer surface.

It is also possible that one or more of said additional treatments are performed before said laser removal treatment and one or more additional treatments are performed after said laser removal treatment. It is preferred that a said additional treatment, being a pickling treatment is performed before said laser removal treatment, such that the outer surface is cleaned, thereby increasing the efficiency of said laser removal treatment, and that a said additional treatment, being an etching treatment is performed after said laser removal treatment, more particularly before said protective layer treatment, such that a surface roughness of the outer surface can be achieved that enables a good adhesion between said outer surface and the protective layer. Possibly a further additional treatment, such as a polishing treatment is needed after said additional treatment being an etching treatment, to achieve the desired surface roughness before providing said protective layer treatment.

**In** one embodiment one or more of said additional treatments are performed upon the protective layer, wherein said one or more additional treatments provide a surface finish chosen from the list of: matte finish, glossy finish, textured finish; and/or wherein said one or more additional treatments provide a surface roughness of between 0.1 µm and 2 µm to the protective layer on the outer surface of the metallic base element. For example, a said additional treatment being a polishing treatment is performed upon the protective layer.

Preferably said full surface treatment and said protective layer treatment are performed in a same chrome bath, wherein said full surface treatment for removing oxides is a reverse chrome plating treatment for removing chrome oxides and wherein said protective layer treatment is a chrome plating treatment.

It is preferred that the outer surface of the metallic base element is a pre-structured surface, and wherein this pre-structured surface is obtained by one or more structuring treatments chosen from the list of: milling, laser ablation, etching treatment, pickling treatment, anodic pickling treatment, spark erosion, waterjet cutting or abrasive waterjet cutting, ultrasonic machining, plasma cutting. Said one or more structuring treatments results in an approximation of the final structure of the structured pressing surface. The more material that can be removed by said one or more structuring treatments, the less material needs to be removed by said laser removal treatment, leading to less recast layer formation.

Preferably said one or more structuring treatments are performed prior to said laser removal treatment. Consequently, said laser removal treatment is performed upon said pre-structured surface.

It is preferred that the outer surface of the metallic base element is a pre-structured surface, and that before said laser removal treatment, at least a portion of the pre-structured surface is scanned, for example with a 2D surface scanner or a 3D surface scanner, resulting in a scan of said pre-structured surface, wherein said scan provides data relating to said pre-structured surface.

Alternatively to scanning at least a portion of the pre-structured surface, or in addition to scanning at least a portion of the pre-structured surface, data relating to said pre-structured surface can also be obtained with aid of simulations and/or artificial intelligence which predict the pre-structured surface on the basis of the treatments performed to obtain this pre-structured surface.

Preferably said data relating to said pre-structured surface is used to determine and control on which locations of said pre-structured surface material should be removed with said laser removal treatment.

It is preferred that a depth of material removal, as a result of said laser removal treatment, is higher than 20 µm, preferably higher than 50 µm, more preferably higher than 100 µm, and wherein the width of material removal is lower than the depth of material removal, preferably at least 20% lower than the depth of material removal. Of course, this does not exclude that on certain locations material is removed with the width of material removal being higher than or being approximately equal to the depth of material removal.

It is preferred that a depth of material removal, as a result of said laser removal treatment, is higher than 200 µm, preferably higher than 300 µm, more preferably higher than 400 µm and wherein the width of material removal is lower than the depth of material removal, preferably at least 20% lower than the depth of material removal. It is also possible that said depth of material removal, as a result of said laser removal treatment is even higher than 400 µm, for example higher than 500 µm, preferably higher than 600 µm, more preferably higher than 1000 µm, for example 1200 µm. Of course, this does not exclude that on certain locations material is removed with the width of material removal being higher than or being approximately equal to the depth of material removal.

Preferably said structured press element substantially consists of steel, preferably stainless steel, for example stainless steel of grade 630 through 635 or stainless steel of grade 410, according to the SAE designation for stainless steel. This is desirable for structured press plates. The metallic base element preferably substantially consists of a metallic base material, said metallic base material being steel.

Preferably said structured press element substantially consists of copper. This is desirable for structured press rollers. The metallic base element preferably substantially consists of a metallic base material, said metallic base material being copper.

It is preferred that the outer surface is free from a recast layer or that a recast layer is created as a result of said laser removal treatment with an average thickness of less than 5 µm, preferably of less than 3 µm, more preferably of less than 1 µm.

As taught by the first and second aspect of the invention, a surface finish and/or roughness of the outer surface of the metallic base element can be provided by means of a Femto laser. This is an inventive aspect in and of itself. Therefore the invention, in accordance with its third aspect, is a method for manufacturing a structured press element, said structured press element comprising a structured pressing surface, wherein a metallic base element is provided, such as a plate or a roller, wherein this metallic base element has an outer surface, this outer surface being a substantially smooth surface or being a pre-structured surface, wherein the method further comprises at least the following treatment which is performed upon the outer surface to obtain the structured pressing surface:
- a full surface treatment performed upon at least 75% of the total surface area of said outer surface, wherein said full surface treatment provides a surface finish chosen from the list of: matte finish, glossy finish, textured finish; and/or wherein said full surface treatment provides a roughness of between 0.1 µm and 4 µm, and wherein said full surface treatment makes use of a laser, preferably a Femto laser.

Instead of using a Femto laser for said full surface treatment, also a Pico laser and/or a Nano laser can be used.

It is noted that all characteristics and embodiments related to the structured pressing surface, the metallic base element, the pre-structured surface and the treatments disclosed within the context of the first aspect and the second, are also applicable mutatis mutandis to the third aspect.

It is preferred that said Femto laser emits light in the infrared and/or near-infrared range, for example ranging from between 780 nm to 3000 nm, more preferably of between 780 nm and 1500 nm, even more preferably of between 950 nm and 1250 nm, most preferably of between 1050 nm and 1100 nm, for example 1068 nm. Advantages of lasers operating with wavelengths within this given range are already disclosed in the above description.

It is preferred that a protective layer treatment, for example a plating treatment, preferably a chrome treatment, for applying a protective layer is performed upon the outer surface.

Said protective layer treatment enhances the durability and resistance to wear and corrosion of said outer surface, ensuring a longer lifespan and consistent performance. Additionally, the protective layer improves the quality and precision of the embossing on the decorative panels.

In one preferred embodiment, said protective layer treatment is a diamond-like carbon (DLC) coating treatment for applying a DLC-layer. Explanation and advantages of said DLC coating are known from the description above.

In another preferred embodiment, said protective layer treatment is a physical vapor deposition (PVD) coating treatment for applying a PVD-layer Preferably said PVD-layer comprises titanium nitrate.

In another preferred embodiment, said protective layer treatment is a chemical vapor deposition (CVD) coating treatment for applying a CVD-layer.

It is preferred that a said full surface treatment is a finishing laser treatment, wherein use is made of a Femto laser. Preferably said finishing laser treatment provides a matte finish to said outer surface. Preferably said finishing laser treatment provides an average surface roughness of higher than 0.3 µm, preferably of higher than 0.35 µm, more preferably of higher than 0.4 µm. It was found that an improved adhesion between said outer surface and a protective layer can be obtained when the surface roughness of at least 75% of the total surface area of said outer surface is above this value.

In a special embodiment, a said full surface treatment is a finishing laser treatment, wherein use is made of a Femto laser, wherein said finishing laser treatment provides a matte finish to said outer surface, and wherein said finishing laser treatment provides an average surface roughness of higher than 1 µm, preferably of higher than 1.5 µm, more preferably of higher than 2 µm. Preferably said finishing laser treatment provides an average surface roughness of lower than 4 µm, preferably of lower than 3 µm. The inventors found that such an average surface roughness is beneficial for imprinting a realistic texture in the material to be pressed, especially in the case that said material to be pressed is used in the production of decorative panels imitating a wood or stone texture.

Preferably said finishing laser treatment provides a surface roughness of lower than 0.9 µm, preferably of lower than 0.8 µm, more preferably of less than 0.55 µm. It was found that the surface roughness of at least 75% of the total surface area of said outer surface is best kept below this value to prevent dirt and other residues from being trapped on said outer surface.

In one embodiment a said full surface treatment is performed upon the protective layer, wherein said full surface treatment provides a surface finish chosen from the list of: matte finish, glossy finish, textured finish; and/or wherein said one or more additional treatments provide a surface roughness of between 0.1 µm and 2 µm to the protective layer on the outer surface of the metallic base element.

Preferably said structured press element substantially consists of steel, preferably stainless steel, for example stainless steel of grade 630 through 635 or stainless steel of grade 410, according to the SAE designation for stainless steel. This is desirable for structured press plates. The metallic base element preferably substantially consists of a metallic base material, said metallic base material being steel.

Preferably said structured press element substantially consists of copper. This is desirable for structured press rollers. The metallic base element preferably substantially consists of a metallic base material, said metallic base material being copper.

According to a fourth aspect, the invention is a press element for manufacturing panels, more particularly laminated panels, wherein this press element comprises a structured pressing surface having a protective layer, and wherein said structured press element comprises one or more recast layers having an average thickness of less than 5 µm, more preferably of less than 2 µm, even more preferably of less than 1 µm. Said recast layers are preferably directly located underneath said protective layer.

Said press element is preferably substantially made of a metallic base material, such as steel or copper. In one embodiment at least a portion of said one or more recast layers is remelted, wherein said remelted portion has properties similar to the properties of the metallic base material.

Preferably said remelted portion exhibits a finer and more uniform microstructure, than the microstructure of a recast layer which has not been remelted, preferably as a result of a controlled melting and/or cooling. It is also preferred that said remelted portion comprises less defects such as microcracks and/or voids, than would be the case if said portion of said one or more recast layers had not been remelted. Additionally it is preferred that the composition of said remelted portion closely resembles the composition of the metallic base element.

Preferably said remelted portion comprises less oxides than would be the case if said portion of said one or more recast layers had not been remelted.

It is preferred that said press element comprises one or more removed material portions with a depth higher than 20 µm, preferably higher than 50 µm, more preferably higher than 100 µm, and wherein said one or more removed material portions have a width lower than the depth of material removal, preferably at least 20% lower than the depth of material removal.

According to a fifth aspect, the invention is a press element for manufacturing panels, optionally according to the fourth aspect, wherein the press element is obtained by a method in accordance with the first, second or third aspect or any variants of said aspects.

The invention according to a sixth aspect relates to a method for manufacturing a structured press element, optionally according to first and/or second and/or third aspect of the invention, said structured press element comprising a structured pressing surface, wherein a metallic base element is provided, such as a plate or a roller, wherein this metallic base element has an outer surface, said outer surface being a substantially smooth surface or being a (pre-)structured surface, wherein the method further comprises at least the following treatments which are performed upon the outer surface to obtain the structured pressing surface:
- a protective layer treatment for applying a protective layer;
- one or more of additional treatments which are performed upon said protective layer, wherein said one or more additional treatments provide one or more sections of the exterior surface of the protective layer with a surface finish chosen from the list of: matte finish, glossy finish, textured finish, and/or wherein said one or more additional treatments provide one or more sections of the exterior surface of the protective layer with an average surface roughness of between 0.1 µm and 6 µm.

Said protective layer treatment enhances the durability and resistance to wear and corrosion of said structured pressing surface, ensuring a longer lifespan and consistent performance. Additionally, the protective layer improves the quality and precision of the embossing on the material to be pressed.

It should be noted that once a protective layer has been applied and said one or more additional treatments are performed, said protective layer forms the exterior of the structured press element. Preferably said protective layer is provided to contact the material which is pressed with the structured press element.

Further, treatments can also be performed upon the outer surface before applying said protective layer treatment. Said treatments can be treatments as described in the first and/or second and/or third aspect. Specific/preferred features described in said first and/or second and/or third aspect about, among others the metallic base element and the protective layer, also apply mutatis mutandis to this sixth embodiment.

The benefit of performing one or more of additional treatments upon said protective layer, is that said protective layer itself can (further) provide the press element with the required gloss, for example a matt surface. Said protective layer forms the exterior surface of the press element. It is thus beneficial to have a protective layer with the desired roughness.

In a preferred embodiment said protective layer treatment is a plating treatment, preferably a chrome treatment.

The protective layer can for example be a chromium layer.

Said protective layer treatment can also be at least one of the following list:
- a diamond-like carbon (DLC) coating treatment for applying a DLC-layer;
- a physical vapor deposition (PVD) coating treatment for applying a PVD-layer, wherein said PVD-layer preferably comprises titanium nitrate;
- a chemical vapor deposition (CVD) coating treatment for applying a CVD-layer.

Preferably, seen according to projection upon a plane extending according to the press element, the one or more sections of the exterior surface of the protective layer treated by at least one of said one or more additional treatments, take up at most 50%, preferably at most 30%, more preferably at most 20%, most preferably at most 10% of said exterior surface. For example said additional treatment can be a laser treatment, which than only treats at most 50% of said exterior surface. By only treating a part of the exterior surface, for example by only treating part of the exterior surface with said laser treatment, it is ensured that the protective layer stays well attached during use of the press element and it is ensured that the protective layer can perform its protective function in a good manner. If the press element is a plate, it extends according to a plane, and said projection is upon said plane. If the press element is a roller, said plane is smoot cylindrical outer surface along which the press element extends.

In a specific embodiment said one or more sections of the exterior surface of the protective layer treated by at least one of said one or more additional treatments, have a surface roughness of between 1,7 µm and 6 µm.

In a specific embodiment said one or more of additional treatments which are performed upon said protective layer, are superficial treatments such that the metallic base element is unaffected by said one or more additional treatments. During use of the press element the metallic base element will remain unaffected such that the press element can be used and repaired, e.g. by applying a new protective layer.

Preferably said one or more additional treatments affect at most the top half of the protective layer, preferably at most the top quarter of the protective layer. This ensures that the protective layer has a sufficient thickness at every location of the press element, such that the metallic base element is well protected by said protective layer at every location.

Preferably the one or more treatments are treatments of at most 10 µm depth, preferably at most 6 µm depth, more preferably at most 2 µm depth, most preferably at most 1 µm depth. This ensures that the protective layer has a sufficient thickness at every location of the press element, such that the metallic base element is well protected by said protective layer at every location.

In a very preferred embodiment the one or more treatments at least comprise a laser treatment. Surprisingly, it has been found that lasers can be used upon said protective layer, to provide the protective layer with the desired gloss, for example with a matt or super matt surface. The laser treatment preferably makes use of a Nano laser and/or a Pico laser. In a preferred embodiment use is made of a femto laser.

Preferably the laser treatment makes use of a laser which emits light in the infrared and/or near-infrared range, preferably ranging from between 780 nm to 3000 nm, more preferably of between 780 nm and 1500 nm, even more preferably of between 950 nm and 1250 nm, most preferably of between 1050 nm and 1100 nm, for example 1068 nm.

Further preferably the structured pressing surface is used to imitate a wood decor or a stone decor, with said wood decor comprising wood pores and with said stone decor comprising cavities, wherein said laser treatment only treats at least one or more sections of the protective layer which provide said pores or cavities. By this specific laser treatment the pores or cavities can be provided matt or super matt.

In a specific embodiment said one or more sections of the exterior surface of the protective layer treated by at least one of said one or more additional treatments, have one or more of the following features:
- the gloss 20° is between 0,1 and 0,4 gloss units;
- the gloss 60° is between 0,25 and 3 gloss units;
- the gloss 85°is between 0,25 and 7 gloss units.

Gloss 20°, gloss 60° and gloss 85° is the gloss, measured with a gloss meter at respectively an angle of 20°, 60° and 85°. These are very matte finishes. Of course in another embodiment or in addition, one or more sections of the exterior surface of the protective layer treated by at least one of said one or more additional treatments, can have a glossy finish, such that glossy/shiny effects can be given to a panel.

With the intention of better showing the characteristics of the invention, herein below, as an example without any limitative character, some preferred embodiments are described, with reference to the accompanying drawings, wherein:
Figure 1 is a schematic representation of a cross section of a portion of a structured press element of the invention and obtained through a method of the invention;
Figure 2 shows schematically some steps in a method according to the first aspect of the invention;
Figure 3 at a larger scale shows a view on the area indicated with F3 in figure 2;
Figure 4 at a larger scale shows a view on the area indicated with F4 in figure 2;
Figure 5 at a larger scale shows a view on the area indicated with F5 in figure 2;
Figure 6 at a larger scale shows a view on the area indicated with F6 in figure 2;
Figure 7 is a schematic perspective view of a portion of a laminated plate material obtained with a structured press element as shown in figure 1;
Figure 8 is a schematic perspective view of a portion of a structured press element obtained through a method of the invention;
Figure 9 shows schematically some steps in a method according to the first aspect of the invention;
Figure 10 at a larger scale shows a view on the area indicated with F10 in figure 9;
Figure 11 at a larger scale shows a view on the area indicated with F11 in figure 9;
Figure 12 at a larger scale shows a view on the area indicated with F12 in figure 9;
Figure 13 at a larger scale shows a view on the area indicated with F13 in figure 9;
Figure 14 shows schematically some steps in a method according to the second aspect of the invention;
Figure 15 at a larger scale shows a view on the area indicated with F15 in figure 14.

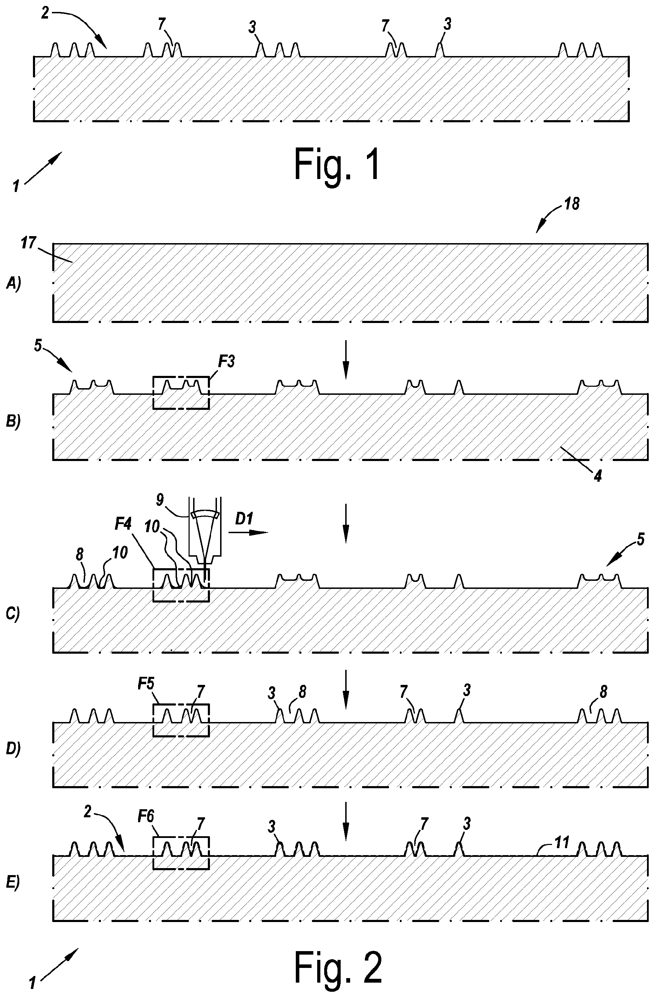

Figure 1 shows a structured press element 1 comprising a structured pressing surface 2. Said structured pressing surface 2 is a specially designed surface of said press element 1. The press element 1 shown in figure 1 is a press plate, and said structured pressing surface 2 comprises of a plurality of protrusions 3.

Figure 2 schematically represents a method for manufacturing the structured press element 1 from figure 1, wherein in step A a plate 17 is provided wherein this plate 17 has a substantially smooth surface 18. This plate 17 is made of a metallic base material, for example is made of stainless steel.

In step B of figure 2, the plate 17 from step A of figure 2 has been transformed into a metallic base element 4 comprising an outer surface 5, which is a pre-structured surface 5. Said pre-structured surface 5 has been obtained by one or more structuring treatments chosen from the list of: milling, laser ablation, etching treatment, pickling treatment, anodic pickling treatment, spark erosion, waterjet cutting or abrasive waterjet cutting, ultrasonic machining, plasma cutting. Preferably said pre-structured surface 5 is at least obtained by milling. Said one or more structuring treatments result in an approximation of the structured pressing surface 2 from figure 1. It is difficult or impossible to achieve more intricate features of the structured pressing surface 2, with said structuring treatments, such that further steps are needed. An example of a said more intricate feature is a trench 7 as shown in figure 1, which is a removed material portion 8 between two closely positioned protrusions 3.

The following steps, each schematically representing a treatment, are performed in a successive manner upon said outer surface 5, in order to obtain said structured press element 1:
- Step C, representing a laser removal treatment;
- Step D, representing the result of one or more recast removal treatments;
- Step E, representing the result of a protective layer treatment.

Step C shows a snapshot of a laser removal treatment for removing material with one or more lasers 9. As a result of said laser removal treatment, a plurality of removed material portions 8 are created. As a result of said laser removal treatment a plurality of recast layers 10 are created within said removed material portions 8. The laser 9 moves in a direction D1. Step C of figure 2 clearly showing the outer surface 5, being a pre-structured surface 5 before said laser removal treatment to the right of said laser 9, as well as showing the outer surface 5 after said laser removal treatment to the left of said laser 9. Said laser removal treatment is preferably performed in successive layers. For example, to achieve a depth of material removal of 10 µm, the process may be executed in 5 passes, each removing a layer of material with a thickness of 2 µm.

Said laser removal treatment uses a Nano laser 9 and/or a Pico laser 9 and/or a Femto laser 9. It is also possible that said laser removal treatment uses a Femto laser 9 operating in a burst regime. In this case the pulse energy of each pulse within a burst can be controlled. Also the amount of pulses within a burst can be controlled. Said burst regime can allow for better control of said laser removal treatment, thereby allowing for an improved level of quality control of the removed material portion 8 as well as reducing the amount of recast layer 10 created as a result of said laser removal treatment. Said laser removal treatment can use a combination of any of the three lasers 9 discussed above. It can be beneficial to remove larger and/or deeper portions of material with a Nano and/or a Pico laser 9 and finer portions of material with a Femto laser 9. The location at which material has been removed by the Femto laser 9 can then be free, or mostly free from a recast layer 10.

Step D of figure 2, shows the result of one or more recast removal treatments, a said recast removal treatment being chosen from the list of:
- an etching treatment;
- a pickling treatment;
- a mechanical removal treatment, such as brushing and/or blasting;
- an optical treatment, such as a treatment with beams of light;
- an electrochemical treatment, such as anodic pickling and/or anodic etching;
- an ultrasonic treatment, such as an ultrasonic bath;
- a rinsing treatment, for example a pressure washing treatment.

To increase effectiveness of the removal of the recast layers 10 and preferably to be essentially free from recast layers 10, the method can comprise two or more of said recast removal treatments. As an example, step D of figure 2 can show the result of three recast removal treatments, namely a pickling treatment followed by a mechanical removal treatment, for example a brushing treatment, further followed by a rinsing treatment, for example a pressure washing treatment.

Step E of figure 2 shows the structured pressing surface 2 of the structured press element 1 obtained after said one or more recast removal treatments represented by step D of figure 2, and after a protective layer treatment for applying a protective layer 11. It is possible that between said one or more recast removal treatments and said protective layer treatment, one or more additional treatments are performed. Said protective layer treatment can be a plating treatment, for example a chrome treatment for applying a chromium layer, and/or a coating treatment for applying a diamond like carbon (DLC) layer, and/or a coating treatment for applying a physical vapor deposition (PVD) layer, and/or a coating treatment for applying a chemical vapor deposition (CVD) layer.

At least one of said one or more additional treatments is a full surface treatment performed upon at least 75% of the total surface area of said outer surface 5. Said one or more additional treatments can for example:
- provide a surface finish chosen from the list of: matte finish, glossy finish, textured finish;
- provide an average surface roughness of between 0.1 µm and 4.0 µm to parts of the structured pressing surface 2 treated with said full surface treatment;
- provide an oxide removal, for example by means of a pickling treatment.

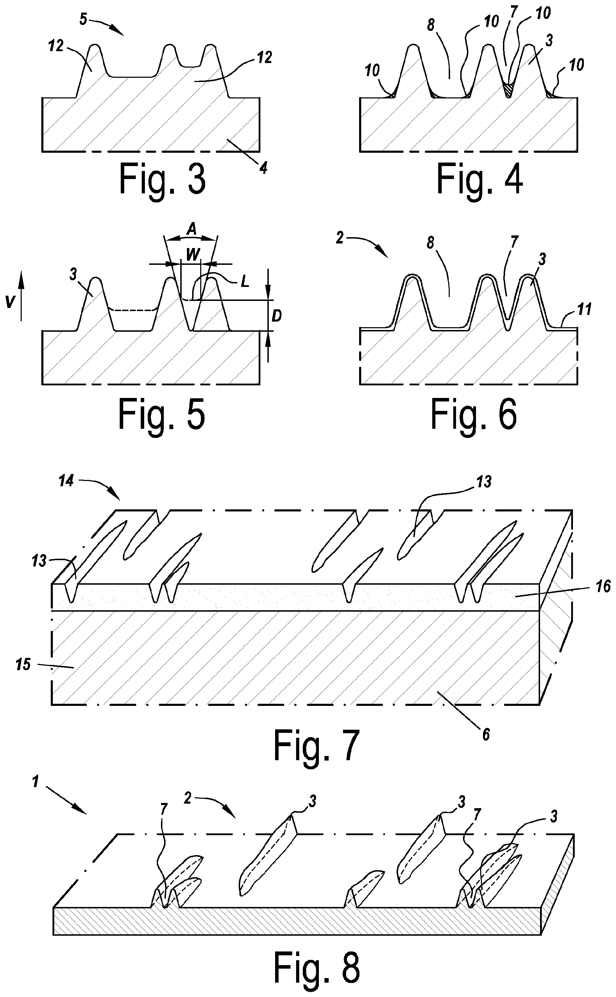

Figure 3 shows a view of a portion of the outer surface 5 being a pre-structured surface 5, as referenced by F3 on step B of figure 2, obtained by one or more structuring treatments. A said structuring treatment for example, makes use of one or more milling tools to form projecting parts 12 of said metallic base element 4. However, achieving said more intricate features, using only said one or more milling tools is not possible, because the size and shape of said one or more milling tools prevent them from accessing tight corners and/or deep recesses.

The view shown in figure 4 is that of F4 on step C of figure 2. The protrusions 3 are bordered by the removed material portions 8 formed by said laser removal treatment. The removed material portion 8 between two closely positioned protrusions 3 forms a trench 7. As a result of said laser removal treatment, recast layers 10 are created at the location of said removed material portions 8. A larger amount of recast layer 10 is created at the location of said trench 7, as compared to at the location of other removed material portions 8.

Figure 5 shows F5 of step D of figure 2, which is the result after said one or more recast removal treatments. The view shown in figure 5 is free from recast layer 10, but it can also be the case that a residual recast layer 10 is still present after said one or more recast removal treatments. In the case no further protective layer treatment would be provided, e.g. if step E would not be present, the portion shown in figure 5, is a portion of the structured pressing surface 2. The depth D, as well as the width W of material removal between the two closely positioned protrusions 3 is clearly indicated. Said depth of material removal D can be defined as the distance, measured in a direction V perpendicular to the said structured press element 1, between the original surface level L, as indicated by the dashed line and in this case corresponding to the pre-structured surface 5, before said laser removal treatment at a location where material is removed, and the deepest point of the structured press element 1 at said location where material has been removed by said laser removal treatment. It should be noted that said depth D of material removal is preferably measured once the recast layer 10 has been removed. The depth D of material removal in the shown embodiment of figure 5 is 300 µm or more, preferably 400 µm or more, for example 500 µm. Said width W of material removal is measured in a direction parallel to the original surface level L. The trench 7 formed between two closely positioned protrusions 3 approximates a V-shape. The angle A formed by said V-shape is indicated in the figure as well. In the shown embodiment from figure 5, said angle A is 45° or less, for example 40° or less.

Figure 6 shows a view of a portion of the structured pressing surface 2, having a protective layer 11, as referenced by F6 in step E of figure 2. The protective layer 11 forms the exterior surface of the structured pressing surface 2.

Said structured pressing surface 2 is used to impart a corresponding structure comprising of a plurality of impressed portions 13 onto a material 14. In the embodiment shown in figure 7, said material 14 is a laminated material 14, such as a laminated plate material, a laminated slab material and/or a laminated web material. Said laminated material 14 is used in the manufacturing of decorative panels, such as wall panels, floor panels, ceiling panels and the like. Said laminated material 14 comprises a substrate 15 and a laminated thereon top layer 16. It is possible that said top layer 16 is laminated on said substrate 15 while said structured pressing surface 2 is used to impart a corresponding structure onto said laminated material 14.

Said laminated material 14 preferably comprises a wood-based substrate 15, for example made of MDF, HDF and/or particleboard and a laminated thereon top layer 16, made of for example resin impregnated paper. Said laminated material 14 can also comprise a thermoplastic substrate 15, for example made of PVC (polyvinyl chloride), PP (polypropylene), PET (polyethylene terephthalate), PETG (polyethylene terephthalate glycol), PLA (polylactic acid) and the like, and a laminated thereon top layer 16, made of thermoplastic material for example made of PVC (polyvinyl chloride), PP (polypropylene), PET (polyethylene terephthalate), PETG (polyethylene terephthalate glycol), PLA (polylactic acid) and the like.

The structured press element 1 shown in figure 8 is able to transfer a corresponding structure of its structured pressing surface 2 as such forming the material 14 shown in figure 7. It is shown in figure 8 that said structured pressing surface 2 comprises a plurality of protrusions 3. As can be seen, said protrusions 3 do not necessarily have constant height throughout their length. A trench 7 formed between two closely positioned protrusions 3 can be seen as well. The structured press element 1 shown in figure 8 can, though not necessarily, have a protective layer 11.

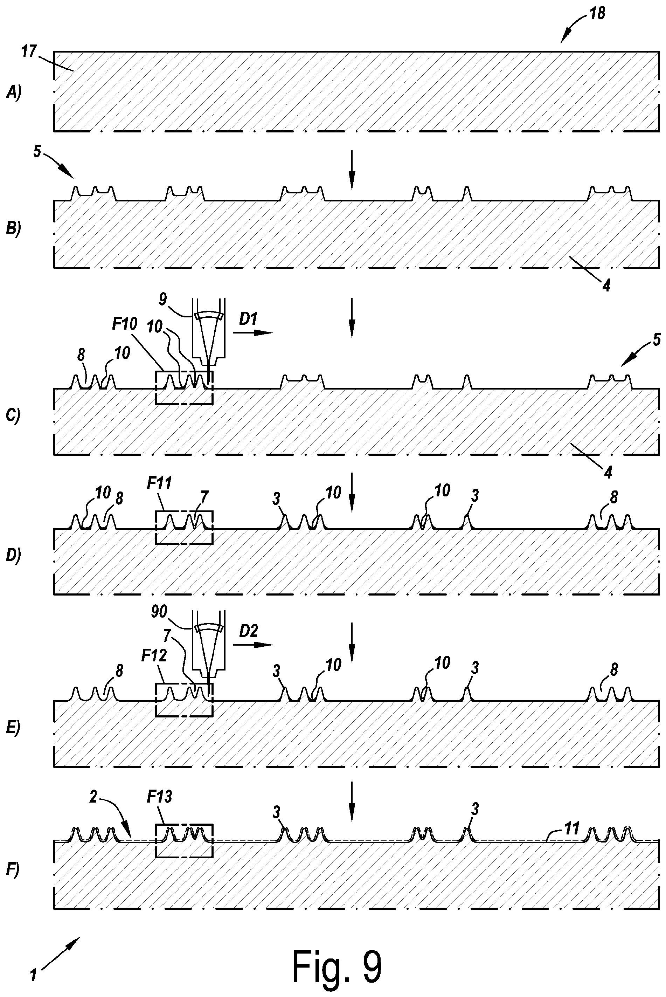

Figure 9 schematically represents another method for manufacturing the structured press element 1 from figure 1, wherein steps A, B and C are the same as steps A, B and C from figure 2.

The following steps, each schematically representing a treatment, are performed in a successive manner upon said outer surface 5, in order to obtain a structured press element 1:
- Step C, representing a laser removal treatment;
- Step D, representing the result of one or more recast removal treatments;
- Step E, representing a recast remelt treatment;
- Step F, representing the result of a protective layer treatment.

Step D shows the result of one or more recast layer treatments, a said recast removal treatment being chosen from the list of:
- an etching treatment;
- a pickling treatment;
- a mechanical removal treatment, such as brushing and/or blasting;
- an optical treatment, such as a treatment with beams of light;
- an electrochemical treatment, such as anodic pickling and/or anodic etching;
- an ultrasonic treatment, such as an ultrasonic bath;
- a rinsing treatment, for example a pressure washing treatment.

To increase effectiveness of the total recast removal, the method preferably comprises two or more of said recast removal treatments. As an example, step D of figure 2 can show the result of three recast removal treatments, namely a pickling treatment followed by a mechanical removal treatment, for example a brushing treatment, further followed by a rinsing treatment, for example a pressure washing treatment. After said one or more recast removal treatments, a portion of said recast layers 10 has been removed, but there is still recast layer 10 present.

Step E of figure 9 shows a snapshot of a recast remelt treatment for remelting at least part of said one or more recast layers 10. At least part of said one or more recast layers 10 is remelted together with at least part of the underlying metallic base material, leading to a more uniform composition of the remelted and subsequently resolidified material. Said subsequently resolidified material comprising a portion of resolidified recast layer 10 and resolidified metallic base material.

Said recast remelt treatment preferably makes use of one or more lasers 90, such as Nano lasers 90 and/or Pico lasers 90 and/or Femto lasers 90. Said recast remelt treatment can also make use of one or more continuous lasers 90, for example continuous carbon dioxide lasers 90. At least a portion of the irradiated recast layer 10 is heated by the absorbed laser energy and melts and subsequently resolidifies. The wavelength and/or intensity and/or treatment duration of said one or more lasers 90 is configured in such a way that said resolidified recast layer 10 exhibits better adherence to the protective layer 11, when compared to a recast layer 10 which has not undergone a recast remelt treatment. The laser 90 moves in a direction D2, clearly showing the state before said recast remelt treatment to the right of said laser 90, as well as showing the state after said recast remelt treatment to the left of said laser 90.

Step F of figure 9 shows the structured pressing surface 2 of the structured press element 1 obtained after said recast remelt treatment, and after a protective layer treatment for applying a protective layer 11. It is possible that after said recast removal treatment one or more additional treatments are performed. Said protective layer treatment can be a plating treatment, for example a chrome treatment for applying a chromium layer, and/or a coating treatment for applying a diamond like carbon (DLC) layer, and/or a coating treatment for applying a physical vapor deposition (PVD) layer, and/or a coating treatment for applying a chemical vapor deposition (CVD) layer.

At least one of said one or more additional treatments is a full surface treatment performed upon at least 75% of the total surface area of said outer surface 5. Said one or more additional treatments can for example:
- provide a surface finish chosen from the list of: matte finish, glossy finish, textured finish;
- provide an average surface roughness of between 0.1 µm and 4.0 µm;
- provide an oxide removal, for example by means of a pickling treatment.

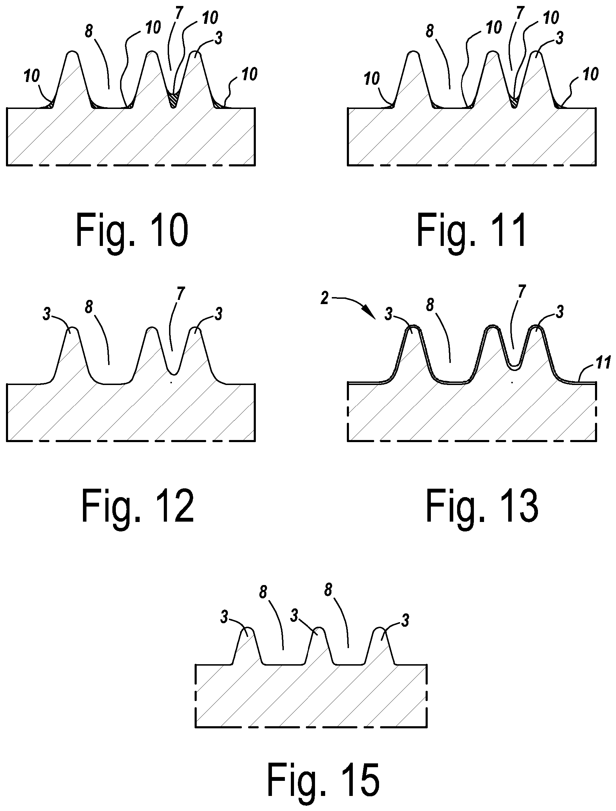

The view shown in figure 10 is that of F10 of step C of figure 9 and is similar to the view shown in figure 4.

The view shown in figure 11, is that of F11 of step D of figure 9. After said one or more recast removal treatments, residual recast layers 10 are still present. It is clear that the amount of recast layer 10 after said one or more recast removal treatments is lower than the amount of recast layer 10 shown in figure 10. However, said residual recast layers 10 can still result in a less favorable surface for the adherence of an optional protective layer 11, leading to difficulties in achieving a uniform and durable protective layer 11.

Figure 12 shows F12 of step E of figure 9. The residual recast layers 10 have been remelted with at least a portion of the underlying metallic base material, leading to a more uniform composition of the remelted and subsequently resolidified material. Said subsequently resolidified material comprising a portion of resolidified recast layer 10 and resolidified metallic base material.

Figure 13 shows F13 in step F of figure 9 and thus shows a view of the structured pressing surface 2, having a protective layer 11. The protective layer 11 forms the exterior surface of the structured pressing surface 2.

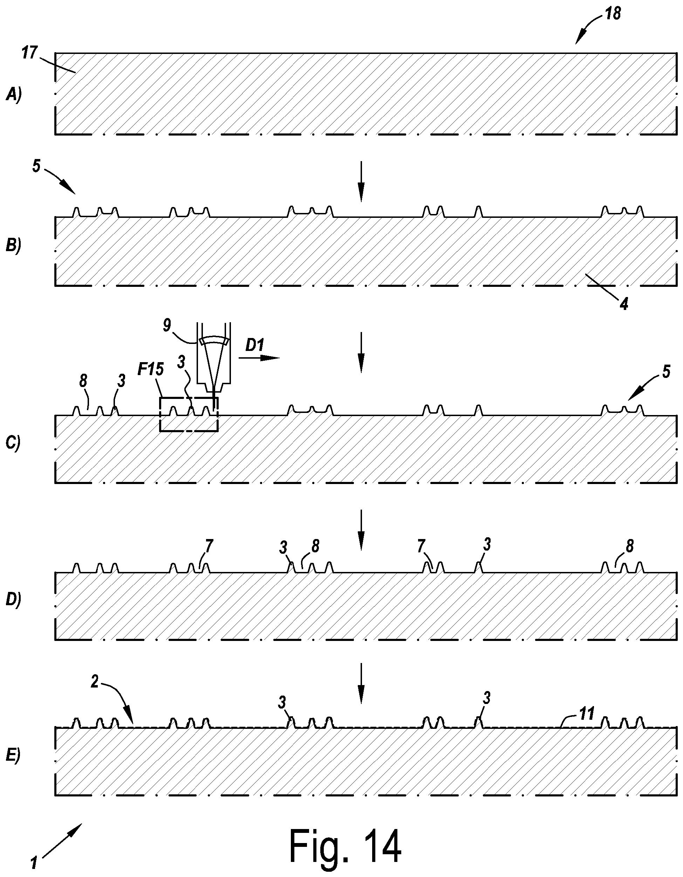

Figure 14 schematically represents a method for manufacturing a structured press element 1, wherein steps A and B are the same as steps A and B from figure 2.

The following steps, each schematically representing a treatment, are performed in a successive manner upon said outer surface 5, in order to obtain a structured press element 1:
- Step C;
- Step D;
- Step E;

Step C shows a snapshot of a laser removal treatment for removing material with one or more lasers 9. Said step C of figure 14 is similar to step C of figure 2, but for a smaller depth of material removal, for example with a depth of material removal of 100 µm or 200 µm. Said laser removal treatment makes use of a Femto laser 9. As a result of said laser removal treatment, a plurality of removed material portions 8 are created. Said removed material portions 8 are free or essentially free of recast layer 10. The laser 9 moves in a direction D1, clearly showing the outer surface 5 before said laser removal treatment to the right of said laser 9, as well as showing the outer surface 5 after said laser removal treatment to the left of said laser 9. Said laser removal treatment is preferably performed in successive layers. For example, to achieve a depth of material removal of 10 µm, the process may be executed in 5 passes, each removing a layer of material from the metallic base element with a thickness of 2 µm.

It is also possible that said laser removal treatment uses a Femto laser 9 operating in a burst regime. In this case the pulse energy of each pulse within a burst can be controlled. Also the amount of pulses within a burst can be controlled.

Step D of figure 14 shows the result after one or more additional treatments. At least one of said one or more additional treatments is a full surface treatment performed upon at least 75% of the total surface area of said outer surface 5. Said one or more additional treatments can for example:
- provide a surface finish chosen from the list of: matte finish, glossy finish, textured finish;
- provide an average surface roughness of between 0.1 µm and 4.0 µm to the treated outer surface 5 of the structured press element 1;
- provide an oxide removal, for example by means of a pickling treatment.

Step E of figure 14 shows the structured pressing surface 2 of the structured press element 1 obtained after said one or more additional treatments and a protective layer treatment for applying a protective layer 11. Said protective layer treatment can be a plating treatment, for example a chrome treatment for applying a chromium layer, and/or a coating treatment for applying a diamond like carbon (DLC) layer, and/or a coating treatment for applying a physical vapor deposition (PVD) layer, and/or a coating treatment for applying a chemical vapor deposition (CVD) layer.

The view shown in figure 15 is that of F15 of step C of figure 14. The protrusions 3 of the structured press element 1 are bordered by the removed material portions 8 formed by said laser removal treatment. Said removed material portions 8 are free or essentially free from recast layers 10.

The invention also relates to the following list of items:
1.- A method for manufacturing a structured press element 1, said structured press element 1 comprising a structured pressing surface 2, wherein a metallic base element 4 is provided, such as a plate or a roller, wherein this metallic base element 4 has an outer surface 5, said outer surface being a substantially smooth surface or being a pre-structured surface, wherein the method further comprises at least the following treatments which are performed upon the outer surface 5 to obtain the structured pressing surface 2:
   - a laser removal treatment for removing material from the metallic base element 4 with one or more lasers 9, wherein at one or more locations material is removed and wherein one or more recast layers 10 are created as a result of said laser removal treatment;
   - one or more recast layer treatments for removing and/or altering at least part of said one or more recast layers 10.
2.- The method according to item 1, wherein said treatments which are performed upon the outer surface 5 to obtain the structured pressing surface 2, further comprise:
   - a protective layer treatment, for example a plating treatment, preferably a chrome treatment, for applying a protective layer 11.
3.- The method according to item 1 or 2, wherein said laser removal treatment uses a Nano laser 9 and/or a Pico laser 9.
4.- The method according to any of the preceding items, wherein the laser removal treatment uses a laser 9 which emits light in the infrared and/or near-infrared range, preferably ranging from between 780 nm to 3000 nm, more preferably of between 780 nm and 1500 nm, even more preferably of between 950 nm and 1250 nm, most preferably of between 1050 nm and 1100 nm, for example 1068 nm.
5.- The method according to any of the preceding items, wherein a said recast layer treatment is a recast removal treatment for removing at least part of said one or more recast layers 10, said recast removal treatment preferably being chosen from the list of:
   - an etching treatment;
   - a pickling treatment;
   - a mechanical removal treatment, such as brushing and/or blasting;
   - an optical treatment, such as a treatment with beams of light;
   - an electrochemical treatment, such as anodic pickling and/or anodic etching;
   - an ultrasonic treatment, such as an ultrasonic bath;
   - a rinsing treatment, such as a pressure washing treatment,
   wherein preferably the method comprises at least two of said recast removal treatments.
6.- The method according to item 5, wherein a said recast removal treatment is a pickling treatment, which makes use of a pickling liquid comprising inhibitors, such that said pickling liquid primarily impacts said one or more recast layers 10.
7.- The method according to item 5 or 6, wherein a said recast removal treatment is an optical treatment using one or more lasers, wherein said one or more lasers are preferably Nano lasers and/or Pico lasers and/or Femto lasers.
8.- The method according to any of the preceding items, wherein a said recast layer treatment is a recast remelt treatment, for remelting at least part of said one or more recast layers 10.
9.- The method according to item 8, wherein said recast remelt treatment makes use of one or more lasers 90, preferably Nano lasers 90 and/or Pico lasers 90 and/or Femto lasers 90.
10.- The method according to any of items 5 to 7 and according to item 8 or 9, wherein the method comprises at least two of said recast layer treatments, being at least one recast removal treatment and at least one recast remelt treatment, and wherein said at least one recast remelt treatment is preferably performed after said at least one recast removal treatment.
11.- The method according to any of the preceding items, wherein said treatments which are performed upon the outer surface 5 to obtain the structured pressing surface 2, further comprise one or more additional treatments, wherein preferably at least one of said one or more additional treatments is a full surface treatment performed upon at least 75% of the total surface area of said outer surface 5, wherein said one or more additional treatments can for example:
   - provide a surface finish chosen from the list of: matte finish, glossy finish, textured finish;
   - provide an average surface roughness of between 0.1 µm and 4.0 µm;
   - provide an oxide removal.
12.- The method according to item 11, wherein said one or more additional treatments are chosen from the list of: etching treatment; pickling treatment; electrochemical pickling treatment; passivation treatment; polishing treatment; blasting treatment, for example sandblasting; electropolishing treatment; anodizing treatment; coating treatment; finishing laser treatment.
13.- The method according to item 11 or 12, wherein at least one of said one or more additional treatments is a said full surface treatment, the full surface treatment being a treatment for removing oxides, for example an etching treatment or a pickling treatment for removing oxides.
14.- The method according to item 2 and item 13, wherein said full surface treatment for removing oxides and said protective layer treatment are performed in a same chrome bath, wherein said full surface treatment for removing oxides is a reverse chrome plating treatment for removing chrome oxides and wherein said protective layer treatment is a chrome plating treatment.
15.- The method according to any of the preceding items, wherein the outer surface 5 of the metallic base element 4 is a pre-structured surface, and wherein this pre-structured surface 5 is obtained by one or more structuring treatments chosen from the list of: milling; laser ablation; etching treatment; pickling treatment; anodic pickling treatment; spark erosion; waterjet cutting; ultrasonic machining.
16.- The method according to any of the preceding items, wherein the outer surface 5 of the metallic base element 4 is a pre-structured surface, and wherein before said laser removal treatment, at least a portion of the pre-structured surface 5 is scanned, for example with a 3D surface scanner, resulting in a scan of said pre-structured surface 5, wherein said scan provides data relating to said pre-structured surface 5.
17.- The method according to item 16, wherein said data relating to said pre-structured surface 5 is used to determine and control on which locations of said pre-structured surface 5 material should be removed with said laser removal treatment.
18.- The method according to any of the preceding items, wherein a depth D of material removal, as a result of said laser removal treatment, is higher than 20 µm, preferably higher than 50 µm, more preferably higher than 100 µm, and wherein the width W of material removal is lower than the depth D of material removal, preferably at least 20% lower than the depth D of material removal.
19.- The method according to any of the preceding items, wherein a depth D of material removal, as a result of said laser removal treatment, is higher than 200 µm, preferably higher than 300 µm, more preferably higher than 400 µm and wherein the width W of material removal is lower than the depth D of material removal, preferably at least 20% lower than the depth D of material removal.
20.- The method according to any of the preceding items, wherein said structured press element 1 substantially consists of steel, preferably stainless steel, for example stainless steel of grade 630 through 635 or stainless steel of grade 410.
21.- A method for manufacturing a structured press element 1, said structured press element 1 comprising a structured pressing surface 2, wherein a metallic base element 4 is provided, such as a plate or a roller, wherein said metallic base element 4 has an outer surface 5, said outer surface 5 being a substantially smooth surface or being a pre-structured surface, wherein the method further comprises at least the following treatment which is performed upon the outer surface 5 to obtain the structured pressing surface 2:
   - a laser removal treatment for removing material from the metallic base element 4, wherein at one or more locations material is removed and wherein said laser removal treatment makes use of a Femto laser 9.
22.- The method according to item 21, wherein the method further comprises the following treatment which is performed upon the outer surface 5 to obtain the structured pressing surface 2:
   - a protective layer treatment, for example a plating treatment, preferably a chrome treatment, for applying a protective layer 11,
   wherein said protective layer treatment is performed after the laser removal treatment.
23.- The method according to item 21 or 22, wherein one or more additional treatments are performed upon the outer surface 5, wherein preferably at least one of said one or more additional treatments is a full surface treatment performed upon at least 75% of the total surface area of said outer surface 5, wherein said one or more additional treatments can for example:
   - provide a surface finish chosen from the list of: matte finish, glossy finish, textured finish;
   - provide an average surface roughness of between 0.1 µm and 4.0 µm;
   - provide an oxide removal.
24.- The method according to item 23, wherein said one or more additional treatments are chosen from the list of: etching treatment; pickling treatment; electrochemical pickling treatment; passivation treatment; polishing treatment; blasting treatment, for example sandblasting; electropolishing treatment; anodizing treatment; coating treatment; finishing laser treatment.
25.- The method according to item 23 or 24, wherein said one or more additional treatments are performed after said laser removal treatment.
26.- The method according to item 24 or 25, wherein a said additional treatment is a finishing laser treatment, wherein use is made of a Femto laser, wherein said finishing laser treatment provides a matte finish.
27.- The method according to any of the items 23 to 26, wherein at least one of said one or more additional treatments is a said full surface treatment, the full surface treatment being a treatment for removing oxides, for example a pickling treatment for removing oxides.
28.- The method according to item 22 and according to item 27, wherein said full surface treatment and said protective layer treatment are performed in a same chrome bath, wherein said full surface treatment for removing oxides is a reverse chrome plating treatment for removing chrome oxides and wherein said protective layer treatment is a chrome plating treatment.
29.- The method according to any of the items 21 to 28, wherein the outer surface 5 of the metallic base element 4 is a pre-structured surface, and wherein this pre-structured surface 5 is obtained by one or more structuring treatments chosen from the list of: milling; laser ablation; etching; pickling; anodic pickling; spark erosion; waterjet cutting; ultrasonic machining.
30.- The method according to any of the items 21 to 29, wherein the outer surface 5 of the metallic base element 4 is a pre-structured surface 5, and wherein before said laser removal treatment at least a portion of the pre-structured surface 5 is scanned, for example with a 3D surface scanner, resulting in a scan of said pre-structured surface 5, wherein said scan provides data relating to said pre-structured surface 5.
31.- The method according to item 30, wherein said data relating to said pre-structured surface 5 is used to determine and control on which locations of said pre-structured surface 5 material should be removed with said laser removal treatment.
32.- The method according to any of the items 21 to 31, wherein a depth D of material removal, as a result of said laser removal treatment, is higher than 20 µm, preferably higher than 50 µm, more preferably higher than 100 µm, and wherein the width W of material removal is lower than the depth D of material removal, preferably at least 20% lower than the depth D of material removal.
33.- The method according to any of the items 21 to 32, wherein a depth D of material removal, as a result of said laser removal treatment, is higher than 200 µm, preferably higher than 300 µm, more preferably higher than 400 µm and wherein the width W of material removal is lower than the depth D of material removal, preferably at least 20% lower than the depth D of material removal.
34.- The method according to any of the items 21 to 33, wherein said structured press element 1 substantially consists of steel, preferably stainless steel, for example stainless steel of grade 630 through 635 or stainless steel of grade 410.
35.- The method according to any of the items 21 to 34, wherein said laser removal treatment is free from creating a recast layer 10 or wherein a recast layer 10 is created as a result of said laser removal treatment with an average thickness of less than 5 µm, preferably of less than 3 µm, more preferably of less than 1 µm.
36.- A structured press element for manufacturing panels, more particularly laminated panels, wherein this structured press element 1 comprises a structured pressing surface 2, said structured pressure surface having a protective layer 11 and wherein said structured press element 1 comprises one or more recast layers 10 having an average thickness of less than 5 µm.
37.- A structured press element for manufacturing panels, optionally according to item 36, wherein the structured press element 1 is obtained by a method in accordance with any of the items 1 to 35.
38.- A method for manufacturing a structured press element 1, optionally according to any of the preceding items 1 to 35, said structured press element 1 comprising a structured pressing surface 2, wherein a metallic base element 4 is provided, such as a plate or a roller, wherein this metallic base element 4 has an outer surface 5, said outer surface 5 being a substantially smooth surface or being a structured surface, wherein the method further comprises at least the following treatments which are performed upon the outer surface 5 to obtain the structured pressing surface 2:
   - a protective layer treatment for applying a protective layer 11;
   - one or more of additional treatments which are performed upon said protective layer 11, wherein said one or more additional treatments provide one or more sections of the exterior surface of the protective layer 11 with a surface finish chosen from the list of: matte finish, glossy finish, textured finish, and/or wherein said one or more additional treatments provide one or more sections of the exterior surface of the protective layer 11 with an average surface roughness of between 0,1 µm and 6 µm.
39.- The method according to item 38, wherein said protective layer treatment is a plating treatment, preferably a chrome treatment.
40.- The method according to item 38 or 39, wherein the protective layer 11 is a chromium layer.
41.- The method according to item 38, wherein said protective layer treatment is at least one of the following list:
   - a diamond-like carbon (DLC) coating treatment for applying a DLC-layer;
   - a physical vapor deposition (PVD) coating treatment for applying a PVD-layer, wherein said PVD-layer preferably comprises titanium nitrate;
   - a chemical vapor deposition (CVD) coating treatment for applying a CVD-layer.
42.- The method according to any of the preceding items 38 to 41, wherein, seen according to a projection upon a plane extending according to the press element 1, the one or more sections of the exterior surface of the protective layer 11 treated by at least one of said one or more additional treatments, take up at most 50%, preferably at most 30%, more preferably at most 20%, most preferably at most 10% of said exterior surface.
43.- The method according to any of the preceding items 38 to 42, wherein said one or more sections of the exterior surface of the protective layer 11 treated by at least one of said one or more additional treatments, have a surface roughness of between 1,7 µm and 6 µm.
44.- The method according to any of the preceding items 38 to 43, wherein one or more of additional treatments which are performed upon said protective layer 11 are superficial treatments such that the metallic base element 4 is unaffected by said one or more additional treatments
45.- The method according to any of the preceding items 38 to 44, wherein said one or more additional treatments affect at most the top half of the protective layer 11, preferably at most the top quarter of the protective layer 11.
46.- The method according to any of the preceding items 38 to 45, wherein the one or more treatments are treatments of at most 10 µm depth, preferably at most 6 µm depth, more preferably at most 2 µm depth, most preferably at most 1 µm depth.
47.- The method according to any of the preceding items 38 to 46, wherein the one or more treatments at least comprise a laser treatment.
48.- The method according to item 47, wherein the structured pressing surface 2 is used to imitate a wood decor or a stone decor, with said wood decor comprising wood pores and with said stone decor comprising cavities, wherein said laser treatment treats at least one or more sections of the protective layer 11 which provide said pores or cavities.
49.- The method according to any of the preceding items 38 to 48, wherein said one or more sections of the exterior surface of the protective layer 11 treated by at least one of said one or more additional treatments, have one or more of the following features:
   - the gloss 20° is between 0,1 and 0,4 gloss units;
   - the gloss 60° is between 0,25 and 3 gloss units;
   - the gloss 85°is between 0,25 and 7 gloss units.

## Claims

1. A method for manufacturing a structured press element (1), said structured press element (1) comprising a structured pressing surface (2), wherein a metallic base element (4) is provided, such as a plate or a roller, wherein this metallic base element (4) has an outer surface (5), said outer surface being a substantially smooth surface or being a pre-structured surface, wherein the method further comprises at least the following treatments which are performed upon the outer surface (5) to obtain the structured pressing surface (2):
- a laser removal treatment for removing material from the metallic base element (4) with one or more lasers (9), wherein at one or more locations material is removed and wherein one or more recast layers (10) are created as a result of said laser removal treatment;
- one or more recast layer treatments for removing and/or altering at least part of said one or more recast layers (10);
and wherein optionally said treatments which are performed upon the outer surface (5) to obtain the structured pressing surface (2), further comprise:
- a protective layer treatment, for example a plating treatment, preferably a chrome treatment, for applying a protective layer (11).

2. The method according to claim 1, wherein a said recast layer treatment is a recast removal treatment for removing at least part of said one or more recast layers (10), said recast removal treatment preferably being chosen from the list of:
- an etching treatment;
- a pickling treatment, which preferably makes use of a pickling liquid comprising inhibitors, such that said pickling liquid primarily impacts said one or more recast layers (10);
- a mechanical removal treatment, such as brushing and/or blasting;
- an optical treatment, such as a treatment with beams of light, preferably using one or more lasers, wherein said one or more lasers are preferably Nano lasers and/or Pico lasers and/or Femto lasers;
- an electrochemical treatment, such as anodic pickling and/or anodic etching;
- an ultrasonic treatment, such as an ultrasonic bath;
- a rinsing treatment, such as a pressure washing treatment,
wherein preferably the method comprises at least two of said recast removal treatments.

3. The method according to any of the preceding claims, wherein a said recast layer treatment is a recast remelt treatment, for remelting at least part of said one or more recast layers (10), preferably wherein said recast remelt treatment makes use of one or more lasers (90), preferably Nano lasers (90) and/or Pico lasers (90) and/or Femto lasers (90).

4. The method according to any of the preceding claims, wherein said treatments which are performed upon the outer surface (5) to obtain the structured pressing surface (2), further comprise one or more additional treatments, wherein preferably at least one of said one or more additional treatments is a full surface treatment performed upon at least 75% of the total surface area of said outer surface (5), wherein said one or more additional treatments can for example:
- provide a surface finish chosen from the list of: matte finish, glossy finish, textured finish;
- provide an average surface roughness of between 0.1 µm and 4.0 µm;
- provide an oxide removal;
and wherein preferably said one or more additional treatments are chosen from the list of: etching treatment; pickling treatment; electrochemical pickling treatment; passivation treatment; polishing treatment; blasting treatment, for example sandblasting; electropolishing treatment; anodizing treatment; coating treatment; finishing laser treatment.

5. The method according to any of the preceding claims, wherein the outer surface (5) of the metallic base element (4) is a pre-structured surface, and wherein preferably
- this pre-structured surface (5) is obtained by one or more structuring treatments chosen from the list of: milling; laser ablation; etching treatment; pickling treatment; anodic pickling treatment; spark erosion; waterjet cutting; ultrasonic machining; and/or
- before said laser removal treatment, at least a portion of the pre-structured surface (5) is scanned, for example with a 3D surface scanner, resulting in a scan of said pre-structured surface (5), wherein said scan provides data relating to said pre-structured surface (5), and wherein more preferably said data relating to said pre-structured surface (5) is used to determine and control on which locations of said pre-structured surface (5) material should be removed with said laser removal treatment.

6. The method according to any of the preceding claims, wherein a depth (D) of material removal, as a result of said laser removal treatment, is higher than 20 µm, preferably higher than 50 µm, more preferably higher than 100 µm, more preferably higher than 200 µm, more preferably higher than 300 µm, most preferably higher than 400 µm and wherein the width (W) of material removal is lower than the depth (D) of material removal, preferably at least 20% lower than the depth (D) of material removal.

7. A method for manufacturing a structured press element (1), said structured press element (1) comprising a structured pressing surface (2), wherein a metallic base element (4) is provided, such as a plate or a roller, wherein said metallic base element (4) has an outer surface (5), said outer surface (5) being a substantially smooth surface or being a pre-structured surface, wherein the method further comprises at least the following treatment which is performed upon the outer surface (5) to obtain the structured pressing surface (2):
- a laser removal treatment for removing material from the metallic base element (4), wherein at one or more locations material is removed and wherein said laser removal treatment makes use of a Femto laser (9).

8. The method according to claim 7, wherein the method further comprises the following treatment which is performed upon the outer surface (5) to obtain the structured pressing surface (2):
- a protective layer treatment, for example a plating treatment, preferably a chrome treatment, for applying a protective layer (11),
wherein said protective layer treatment is performed after the laser removal treatment.

9. The method according to claim 7 or 8, wherein one or more additional treatments are performed upon the outer surface (5), wherein preferably at least one of said one or more additional treatments is a full surface treatment performed upon at least 75% of the total surface area of said outer surface (5), wherein said one or more additional treatments can for example:
- provide a surface finish chosen from the list of: matte finish, glossy finish, textured finish;
- provide an average surface roughness of between 0.1 µm and 4.0 µm;
- provide an oxide removal.
and wherein preferably said one or more additional treatments are chosen from the list of: etching treatment; pickling treatment; electrochemical pickling treatment; passivation treatment; polishing treatment; blasting treatment, for example sandblasting; electropolishing treatment; anodizing treatment; coating treatment; finishing laser treatment.

10. The method according to any of the claims 7 to 9, wherein the outer surface (5) of the metallic base element (4) is a pre-structured surface, and wherein preferably
- this pre-structured surface (5) is obtained by one or more structuring treatments chosen from the list of: milling; laser ablation; etching; pickling; anodic pickling; spark erosion; waterjet cutting; ultrasonic machining; and/or
- before said laser removal treatment at least a portion of the pre-structured surface (5) is scanned, for example with a 3D surface scanner, resulting in a scan of said pre-structured surface (5), wherein said scan provides data relating to said pre-structured surface (5), wherein more preferably said data relating to said pre-structured surface (5) is used to determine and control on which locations of said pre-structured surface (5) material should be removed with said laser removal treatment.

11. The method according to any of the claims 7 to 10, wherein a depth (D) of material removal, as a result of said laser removal treatment, is higher than 20 µm, preferably higher than 50 µm, more preferably higher than 100 µm, and wherein the width (W) of material removal is lower than the depth (D) of material removal, preferably at least 20% lower than the depth (D) of material removal.

12. The method according to any of the claims 7 to 11, wherein said laser removal treatment is free from creating a recast layer (10) or wherein a recast layer (10) is created as a result of said laser removal treatment with an average thickness of less than 5 µm, preferably of less than 3 µm, more preferably of less than 1 µm.

13. A method for manufacturing a structured press element (1), optionally according to any of the preceding claims 1 to 12, said structured press element (1) comprising a structured pressing surface (2), wherein a metallic base element (4) is provided, such as a plate or a roller, wherein this metallic base element (4) has an outer surface (5), said outer surface (5) being a substantially smooth surface or being a structured surface, wherein the method further comprises at least the following treatments which are performed upon the outer surface (5) to obtain the structured pressing surface (2):
- a protective layer treatment for applying a protective layer (11);
- one or more of additional treatments which are performed upon said protective layer (11), wherein said one or more additional treatments provide one or more sections of the exterior surface of the protective layer (11) with a surface finish chosen from the list of: matte finish, glossy finish, textured finish, and/or wherein said one or more additional treatments provide one or more sections of the exterior surface of the protective layer (11) with an average surface roughness of between 0,1 µm and 6 µm.

14. The method according to claim 13, wherein said protective layer treatment is a plating treatment, preferably a chrome treatment and/or wherein the protective layer (11) is a chromium layer.

15. The method according to claim 13 or 14, wherein one or more of additional treatments which are performed upon said protective layer (11) are superficial treatments such that the metallic base element (4) is unaffected by said one or more additional treatments, and wherein preferably said one or more additional treatments affect at most the top half of the protective layer (11), preferably at most the top quarter of the protective layer (11).
